# EUROPEAN PATENT APPLICATION

(11) **EP 4 693 710 A1**
(43) Date of publication of application: **11.02.2026**
(21) Application number: 24890023.5
(22) Date of filing: 22.05.2024
(51) Int. Cl.: H01M 50/553, H01M 50/103

(54) **HOUSING ASSEMBLY, BATTERY CELL, BATTERY, AND ELECTRICAL APPARATUS**

(30) Priority: 16.11.2023 CN 202311532267
(71) Applicant: Contemporary Amperex Technology Co., Limited, Ningde, Fujian 352100 (CN)
(72) Inventor: WU, Kai, Ningde, Fujian 352100 (CN); LIN, Denghua, Ningde, Fujian 352100 (CN); CHEN, Wenwei, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2024/094751
(87) International publication number: WO 2025/102652

(57) **Abstract**

A housing assembly, a battery cell, a battery, and an electrical apparatus. The housing assembly comprises a housing, a terminal post, and an insulating and sealing structure. The housing comprises a first housing wall, a first accommodation groove is formed in the first housing wall, and a mounting through hole is formed in the bottom wall of the first accommodation groove. The first terminal post comprises a terminal post body and a first extending platform, the first extending platform being arranged on the first housing wall on the side where the first accommodation groove is formed. The insulating and sealing structure comprises a first matching structure, the first matching structure is matched between the first housing wall and the first extending platform, and at least part of the first matching structure is accommodated in the first accommodation groove.

## Description

### CROSS-REFERENCE TO RELATED APPLICATION

The present application is proposed and claims priority to Chinese Patent Application No. 202311532267.0 filed November 16, 2023, which is incorporated by reference in its entirety.

### TECHNICAL FIELD

The present application relates to the field of battery technologies, and in particular to a case assembly, a battery cell, a battery, and an electrical apparatus.

### BACKGROUND

In recent years, new energy vehicles have made a leap forward in development. In the field of electric vehicles, batteries, as power sources of electric vehicles, play an irreplaceable and important role. Typically, a battery includes a plurality of battery cells in order to provide an appropriate voltage and capacity for an electric vehicle; however, it is difficult to increase the energy density of the battery cells, making it difficult to increase the range of an electric vehicle, which easily limits usage scenarios of the battery cells and electric vehicles.

### SUMMARY

The present application provides a case assembly, a battery cell, a battery, and an electrical apparatus, which can improve the energy density of the battery cell.

In a first aspect, an embodiment of the present application provides a case assembly, including: a case, the case including a first case wall, the first case wall being formed with a first accommodating groove, a groove opening of the first accommodating groove being formed on an outer surface or inner surface of the first case wall, and a bottom wall of the first accommodating groove being formed with a mounting through hole; a first terminal post, the first terminal post including a terminal post body penetrating the mounting through hole, and a first extension platform connected to the terminal post body and extending relative to the terminal post body in a direction away from a central axis of the mounting through hole, and the first extension platform being arranged on a side of the first case wall where the first accommodating groove is formed; and an insulating sealing structure, the insulating sealing structure including a first fitting structure, the first fitting structure being fitted between the first case wall and the first extension platform, and at least a part of the first fitting structure being accommodated in the first accommodating groove.

In the above technical solution, by setting the first extension platform, the structural strength and mounting reliability of the first terminal post can be increased; by accommodating at least a part of the first fitting structure in the first accommodating groove of the first case wall, on the premise that the case provides sufficient arrangement space for a cell assembly of the battery cell, the case can additionally provide arrangement space for at least a part of the first fitting structure. The part of the first fitting structure located in the first accommodating groove may not occupy the arrangement space provided by the case for the cell assembly, or can reduce the occupied space of the case assembly, thereby improving the volumetric energy density of the battery cell.

In some embodiments, at least a part of the first extension platform is accommodated in the first accommodating groove.

In the above technical solution, by arranging that at least a part of the first extension platform is accommodated in the first accommodating groove, on the premise that the case provides sufficient arrangement space for the cell assembly of the battery cell, the case can additionally provide arrangement space for at least a part of the first extension platform, which is conducive to further improving the volumetric energy density of the battery cell.

In some embodiments, on a plane perpendicular to the central axis of the mounting through hole, an orthographic projection of the first extension platform is located within an outer contour range of an orthographic projection of a peripheral wall of the first accommodating groove.

In the above technical solution, by being arranged on the plane perpendicular to the axial direction of the mounting through hole, the orthographic projection of the first extension platform is located within the outer contour range of the orthographic projection of the peripheral wall of the first accommodating groove, so that at least a part of the first extension platform facing the bottom wall of the first accommodating groove can be accommodated in the first accommodating groove, and the first extension platform is not easy to interfere with a groove wall of the first accommodating groove, thereby facilitating assembling of the first terminal post and the first case wall. Moreover, the above arrangement can also improve assembling convenience of the first extension platform and the first case wall when the first extension platform is completely accommodated in the first accommodating groove.

In some embodiments, the first extension platform is located at an axial end of the terminal post body, and a depth of the first accommodating groove is greater than a sum of a thickness of at least a part of the first fitting structure and a thickness of the first extension platform in the axial direction of the mounting through hole.

In the above technical scheme, by arranging the first extension platform at the end of the terminal post body facing the interior of the case, and the depth of the first accommodating groove being greater than the sum of the thickness of the above-mentioned at least a part of the first fitting structure and the thickness of the first extension platform in the axial direction of the mounting through hole, it is conducive to further increasing the accommodating space of the first accommodating groove and improving the accommodating capacity of the first accommodating groove. Therefore, when the case assembly is used for a battery cell, the first accommodating groove can also provide arrangement space for other components of the battery cell arranged on the side of the first extension platform facing away from the terminal post body, or part of other components arranged on the side of the first extension platform facing away from the terminal post body, or the like, so that the above-mentioned other components or the above-mentioned part of other components can be accommodated in the first accommodating groove, so as to free up more arrangement space for the cell assembly or other components outside the case, which is conducive to further improving the volumetric energy density of the battery cell or improving the volumetric energy density of the battery.

In some embodiments, the first case wall includes a main body portion and an accommodating portion, the main body portion is arranged around the accommodating portion, the accommodating portion includes an end wall and a side wall, the end wall and the side wall enclose the first accommodating groove, the mounting through hole is formed on the end wall, and a side surface of the end wall facing away from the side wall is arranged to protrude from a surface of the main body portion.

In the above technical solution, the first case wall includes the main body portion and the accommodating portion, the main body portion is arranged around the accommodating portion, and the accommodating portion defines the first accommodating groove, so that the first accommodating groove is spaced apart from an outer peripheral edge of the first case wall, and the accommodating portion can be processed by clamping and fixing the main body portion, thereby improving the processing convenience. At the same time, since the side surface of the end wall facing away from the side wall protrudes from the surface of the main body portion, it is conducive to appropriately increasing a thickness of the end wall and improving the structural strength of the end wall, thereby improving the mounting reliability of the first terminal post. At the same time, it can also reduce a difference between the thickness of the end wall and the thickness of the main body portion, thereby improving the balance of the structural strength of the first case wall.

In some embodiments, the thickness of the end wall and a thickness of the side wall are both greater than or equal to the thickness of the main body portion.

In the above technical solution, by setting the thickness of the end wall and the thickness of the side wall to be greater than or equal to the thickness of the main body portion, a difference between a wall thickness of the accommodating portion and a wall thickness of the main body portion can be further reduced. At the same time, distribution of a material corresponding to the first case wall can be made more reasonable, which is conducive to improving the mounting reliability of the first terminal post.

In some embodiments, the main body portion and the accommodating portion are an integral structure formed by stamping or stretching.

In the above technical solution, by arranging the main body portion and the accommodating portion as the integrated structure formed by stamping or stretching, the processing and molding of the first case wall is facilitated. At the same time, there is no need to arrange a connecting structure between the main body portion and the accommodating portion, so as to simplify the structure of the first case wall and reduce the occupation of the first case wall on the internal space or external space of the case.

In some embodiments, a minimum distance between an outer peripheral edge of the accommodating portion and an outer peripheral edge of the main body portion is greater than 0.5 mm.

In the above technical solution, by setting the minimum distance between the outer peripheral edge of the accommodating portion and the outer peripheral edge of the main body portion to be greater than 0.5 mm, the main body portion can be subjected to a flanging operation during the molding of the accommodating portion so as to achieve a sufficient flange width, thereby improving the operational feasibility of stretching or stamping the accommodating portion. At the same time, it is conducive to improving the regularity of the shape of the accommodating portion and preventing the main body portion from being deformed.

In some embodiments, the case further includes a second case wall adjacent to the first case wall, and at least a part of an outer surface of the main body portion is formed as a fillet surface, and the fillet surface is connected to an outer surface of the second case wall.

In the above technical solution, by setting at least a part of the outer surface of the main body portion to be formed as the fillet surface, the minimum distance between the inner peripheral edge and the outer peripheral edge of the main body portion in a radial direction of the mounting through hole is greater than or equal to a radial width of the fillet surface, so that a part of the main body portion connected to the accommodating portion and surrounding the accommodating portion reserves a radial width of the fillet surface for the accommodating portion, and therefore, during the molding of the accommodating portion, the main body portion can be flanged to achieve a sufficient flange width, thereby improving the operational feasibility of stretching or stamping the accommodating portion.

In some embodiments, the main body portion includes a flat portion and a fillet portion, the flat portion is connected to the second case wall through the fillet portion, and an outer surface of the fillet portion is formed as a fillet surface.

In the above technical solution, by arranging the main body portion to include the flat portion and the fillet portion, the flat portion being connected to the second case wall through the fillet portion, it is conducive to appropriately increasing a minimum width of a part of the main body portion located between the outer peripheral edge of the accommodating portion and the corresponding second case wall, so that during the flanging operation, the main body portion can provide a large flange width, so as to further improve the convenience of flanging.

In some embodiments, the first case wall includes a main body portion and an accommodating portion, the main body portion is arranged around the accommodating portion, the accommodating portion includes an end wall and a side wall, the end wall and the side wall enclose the first accommodating groove, the mounting through hole is formed on the end wall, and a side surface of the end wall facing away from the side wall is arranged to be flush with a surface of the main body portion.

In the above technical solution, the main body portion is arranged around the accommodating portion, which is also convenient for processing the accommodating portion by clamping and fixing the main body portion, thereby improving the processing convenience. Because the side surface of the end wall facing away from the side wall is arranged to be flush with the surface of the main body portion, the material of the first case wall can be saved and the cost can be reduced under the premise that the first terminal post is reliably installed.

In some embodiments, the groove opening of the first accommodating groove is formed on the inner surface of the first case wall, and in the radial direction of the mounting through hole, the first fitting structure is spaced apart from the outer peripheral edge of the first extension platform. The case assembly further includes: an insulating structure, and the insulating structure is arranged at the outer peripheral edge of the first extension platform and is at least partially fitted between the first extension platform and the first case wall.

In the above technical solution, the first fitting structure and the outer peripheral edge of the first extension platform are spaced apart in the radial direction of the mounting through hole. Since the first fitting structure is not only used for insulation arrangement but also for sealing, it is conducive to reducing the difficulty of installing the first fitting structure on the premise of achieving a sealed arrangement between the first terminal post and the first case wall. In addition, the insulating structure is arranged at the outer peripheral edge of the first extension platform, and at least a part of the insulating structure is fitted between the first extension platform and the first case wall, so as to improve the insulation reliability between the first extension platform and the first case wall, and reduce the risk of short circuit caused by the outer peripheral edge of the first extension platform and the first case wall being easily contacted due to the large deformation of the first fitting structure, thereby improving the safety of the battery cell.

In some embodiments, on the plane perpendicular to the central axis of the mounting through hole, the orthographic projection of the first extension platform is located within the outer contour range of the orthographic projection of the peripheral wall of the first accommodating groove, and the insulating structure includes a first insulating portion and a second insulating portion that are connected, the first insulating portion is fitted between the bottom wall of the first accommodating groove and the first extension platform, and the second insulating portion is arranged around the first extension platform and covers at least a part of the outer peripheral wall of the first extension platform.

In the above technical solution, the insulating structure including the first insulating portion and the second insulating portion is arranged, so as to enhance an insulating protection effect of the insulating structure on the first extension platform, reduce the risk of contact between the first extension platform and the peripheral wall and bottom wall of the first accommodating groove, and further enhance the insulation reliability between the first extension platform and the first case wall.

In some embodiments, the case assembly further includes: a bracket, the bracket being arranged in the case and suitable for cooperating with the cell assembly of the battery cell to separate an active material-coated portion of the cell assembly from the first case wall, where the bracket and the insulating structure are an integral component; or, the bracket and the insulating structure are separate components and are connected.

In the above technical solution, by arranging the bracket inside the case, when the case assembly is used in the battery cell, the bracket can separate the active material-coated portion from the first case wall, so as to improve the reliability and assembling convenience of the battery cell, and the bracket and the insulating structure are flexibly arranged to better adapt to differentiated needs of the battery cell.

In some embodiments, the first terminal post further includes a second extension platform connected to the terminal post body and extending relative to the terminal post body in the direction away from the central axis of the mounting through hole, the second extension platform and the first extension platform extend to the inner and outer sides of the first case wall respectively. The insulating sealing structure includes a second fitting structure, and the second fitting structure is fitted between the first case wall and the second extension platform.

In the above technical solution, the first terminal post is further provided with the second extension platform connected to the terminal post body and extending relative to the terminal post body in the direction away from the central axis of the mounting through hole. The second extension platform and the first extension platform extend to the inner and outer sides of the first case wall respectively, so that the first terminal post is position-limitedly fitted at the mounting through hole through the first extension platform and the second extension platform, which is conducive to improving the mounting reliability of the first terminal post. At the same time, insulation and sealing between the first case wall and the second extension platform are realized through the second fitting structure, thereby improving the reliability of the battery cell.

In some embodiments, the first case wall is further formed with a second accommodating groove, the groove opening of the first accommodating groove is formed on the inner surface of the first case wall, a groove opening of the second accommodating groove is formed on the outer surface of the first case wall, the second extension platform extends to an outer side of the outer surface of the first case wall, and at least a part of the second fitting structure is accommodated in the second accommodating groove.

In the above technical solution, by accommodating at least a part of the second fitting structure in the second accommodating groove, it is conducive to simultaneously reducing the occupation of the first fitting structure and the second fitting structure on the arrangement space provided for the cell assembly inside the case, and reducing the occupation of the first fitting structure and the second fitting structure on the space outside the case, thereby facilitating further improvement of the volumetric energy density of the battery cell.

In a second aspect, an embodiment of the present application provides a battery cell, including the above-mentioned case assembly and a cell assembly, the cell assembly includes an active material-coated portion and a conductive portion, the active material-coated portion is arranged in the case, and the conductive portion electrically connects the active material-coated portion to the first terminal post.

In the above technical solution, the battery cell adopts the above-mentioned case assembly, which can improve the volumetric energy density and use reliability of the battery cell.

In some embodiments, the active material-coated portion includes a current collector and an active material layer arranged on the current collector, the conductive portion includes a tab portion electrically connected to the current collector, the tab portion includes a plurality of tabs, the plurality of tabs converge at positions close to the current collector to form a first converged portion, the plurality of tabs converge at positions away from the current collector and are connected to form a second converged portion, the first converged portion connects the second converged portion and the active material-coated portion, the groove opening of the first accommodating groove is formed on the inner surface of the first case wall, and at least a part of the second converged portion is accommodated in the first accommodating groove.

In the above technical solution, by arranging the plurality of tabs to converge at the positions close to the current collector to form the second converged portion, at least a part of the second converged portion being accommodated in the first accommodating groove, the occupation of the tab portion on the arrangement space provided for the cell assembly inside the case is reduced, which is conducive to further improving the volumetric energy density of the battery cell.

In some embodiments, the conductive portion further includes an adapter plate, the adapter plate is connected to the second converged portion, the conductive portion is electrically connected to the first terminal post through the adapter plate, and at least a part of the adapter plate is accommodated in the first accommodating groove.

In the above technical solution, by arranging the second converged portion to be indirectly electrically connected to the first terminal post through the adapter plate, at least a part of the adapter plate being accommodated in the first accommodating groove, the occupation of the conductive portion on the arrangement space provided for the cell assembly inside the case is reduced, which is conducive to further improving the volumetric energy density of the battery cell.

In some embodiments, a part of the first converged portion is accommodated in the first accommodating groove.

In the above technical solution, by accommodating a part of the first converged portion in the first accommodating groove, the occupation of the tab portion on the arrangement space provided for the cell assembly inside the case is further reduced, which is conducive to further improving the volumetric energy density of the battery cell.

In some embodiments, the active material-coated portion includes a current collector and an active material layer arranged on the current collector, the conductive portion includes a tab portion and an adapter plate, the tab portion includes a plurality of tabs that are electrically connected to the current collector, the plurality of tabs converge at positions close to the current collector to form a first converged portion, the plurality of tabs converge at positions away from the current collector and are connected to form a second converged portion, the adapter plate is electrically connected to the second converged portion, the groove opening of the first accommodating groove is formed on the inner surface of the first case wall, and at least a part of the adapter plate is accommodated in the first accommodating groove and is electrically connected to the first terminal post.

In the above technical solution, by accommodating at least a part of the adapter plate in the first accommodating groove, the occupation of the conductive portion on the arrangement space provided for the cell assembly inside the case is reduced, which is conducive to further improving the volumetric energy density of the battery cell.

In some embodiments, the first terminal post is formed with a third accommodating groove, a groove opening of the third accommodating groove is formed on a side surface of the first terminal post facing away from the active material-coated portion, the third accommodating groove is in communication with the interior of the case through a perforation, the conductive portion penetrates the perforation and is at least partially accommodated in the third accommodating groove.

In the above technical solution, by arranging the third accommodating groove, it is helpful to reduce the weight of the first terminal post, so as to improve the gravimetric energy density of the battery cell. At the same time, since the groove opening of the third accommodating groove is formed on an outer end face of the terminal post, when at least a part of the conductive portion is accommodated in the third accommodating groove, it is convenient to receive and organize the conductive portion through the groove opening of the third accommodating groove, or to electrically connect the conductive portion to the first terminal post, or the like, thereby reducing the difficulty of producing the battery cell. At the same time, since the third accommodating groove can be in communication with the interior of the case through the perforation, the third accommodating groove can also be used as a buffer and temporary storage structure for an electrolyte solution, so that more electrolyte solution can be accommodated in the case. Since the electrolyte solution may be consumed during the charging and discharging of the battery cell, when there is more electrolyte solution, the service life of the battery cell can be extended. Moreover, because the third accommodating groove can be in communication with the interior of the case through the perforation, the third accommodating groove can also be used as an accommodation and buffer structure for gas produced inside the cell assembly, thereby reducing the expansion of the battery cell.

In a third aspect, an embodiment of the present application further provides a battery, including the above-mentioned battery cell.

In the above technical solution, the battery adopts the above-mentioned battery cell, which can improve the energy density and reliability of the battery.

In some embodiments, there are a plurality of battery cells, and the first terminal post is arranged to protrude from the outer surface of the first case wall. The battery further includes a busbar component, and the busbar component includes a buffer portion and two connecting portions. The two connecting portions are electrically connected to first terminal posts of two battery cells respectively, the buffer portion is connected between the two connecting portions, and at least a part of the buffer portion protrudes toward the case relative to the connecting portion and is stretchable and deformable.

In the above technical solution, by setting at least a part of the buffer portion to be stretchable and deformable, the busbar component can relieve the stress caused by the expansion of the battery cell during the use of the battery, and at least a part of the buffer portion can undergo a certain degree of stretching deformation following the expansion of the battery cell, so as to reduce the pulling of the busbar component on the first terminal post, and also reduce the tensile force on the busbar component, thereby reducing the risk of the busbar component being broken by pulling, and improving the reliability of the battery. By arranging at least a part of the buffer portion to protrude toward the case relative to the connecting portion, so that the space corresponding to the part of the first terminal post of each of the two battery cells protruding from the corresponding case is used to jointly accommodate at least a part of the buffer portion, which is conducive to reducing the space occupied by the battery and further facilitating the improvement of the volumetric energy density of the battery.

In a fourth aspect, an embodiment of the present application provides an electrical apparatus, including the above-mentioned battery.

In the above technical solution, the electrical apparatus adopts the above-mentioned battery, which can improve the range and reliability of the electrical apparatus.

### BRIEF DESCRIPTION OF DRAWINGS

These and other aspects and advantages of embodiments of the present application will become apparent and more readily appreciated from the following descriptions made with reference to the drawings.
FIG. 1 is a schematic structural view of a vehicle according to some embodiments of the present application;
FIG. 2 is an exploded structural view of a battery according to some embodiments of the present application;
FIG. 3 is an exploded structural view of a battery cell according to some embodiments of the present application;
FIG. 4 is a schematic structural view of a case assembly according to some embodiments of the present application;
FIG. 5 is another schematic view of the case assembly shown in FIG. 4;
FIG. 6 is a sectional view along a line A-A in FIG. 5;
FIG. 7 is an enlarged view of a portion B circled in FIG. 6;
FIG. 8 is a schematic view of a case shown in FIG. 4;
FIG. 9 is a partial sectional view of the case shown in FIG. 8;
FIG. 10 is a partial sectional view of a battery cell according to some embodiments of the present application;
FIG. 11 is a sectional view of a battery cell according to some embodiments of the present application;
FIG. 12 is an enlarged view of a portion C circled in FIG. 11;
FIG. 13 is a partial sectional view of a battery cell according to some embodiments of the present application;
FIG. 14 is a partial sectional view of a battery cell according to some embodiments of the present application;
FIG. 15 is a partial sectional view of a battery cell according to some embodiments of the present application;
FIG. 16 is a partial sectional view of a battery cell according to some embodiments of the present application;
FIG. 17 is a partial schematic view of a battery according to some embodiments of the present application;
FIG. 18 is another partial schematic view of the battery shown in FIG. 17; and
FIG. 19 is another schematic view of the battery shown in FIG. 17.

Reference numerals:
Electrical apparatus 1000, controller 300, motor 400, battery 200, battery cell 100, box 101, first box body 101a, second box body 101b, busbar component 102, buffer portion 1021, connecting portion 1022, case assembly 10, case 11, case body 11a, cover plate 11b, first case wall 111, first accommodating groove 111a, mounting through hole 111b, central axis L of mounting through hole, main body portion 1111, flat portion 1111a, fillet portion 1111b, fillet surface 1111c, accommodating portion 1112, end wall 1112a, side wall 1112b, second case wall 112, first terminal post 12, third accommodating groove 12a, perforation 12b, fourth accommodating groove 12c, terminal post body 121, first extension platform 122, second extension platform 123, terminal post cover plate 124, insulating sealing structure 13, first fitting structure 131, second fitting structure 132, insulating structure 14, first insulating portion 141, second insulating portion 142, bracket 15, explosion-proof valve 16, cell assembly 20, active material-coated portion 21, current collector 211, active material layer 212, conductive portion 22, tab portion 221, first converged portion 2211, second converged portion 2212, adapter plate 222.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," etc. in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearances of the phrase in various places in the specification neither necessarily refer to a same embodiment, nor are independent or alternative embodiments mutually exclusive with other embodiments.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "a plurality of" means two or more.

In the present application, the battery cell may include a lithium-ion secondary battery, a lithium-ion primary battery, a lithium sulfur battery, a sodium lithium-ion battery, a sodium-ion battery or a magnesium-ion battery and so on. This is not limited in the embodiments of the present application. The battery cell may be in a cylindrical shape, a flat shape, a cuboid shape or another shape, which is also not limited in the embodiments of the present application. Battery cells are generally divided into three kinds according to packaging manners: cylindrical battery cells, square battery cells, and pouch cells. The embodiments of the present application do not limit this.

A battery mentioned in the embodiments of the present application refers to a single physical module including a plurality of battery cells to provide a higher voltage and capacity. For example, the battery mentioned in the present application may be a battery module, a battery pack, or the like. The battery module usually includes a plurality of battery cells. The battery usually includes a box for encapsulating the plurality of battery cells or a plurality of battery modules. The box can avoid liquid or other foreign matters from affecting charging or discharging of the battery cells. Certainly, the battery may not include the box.

Exemplarily, a battery cell may generally include a case, a cell assembly, and an electrolyte solution. The case is configured to accommodate the cell assembly and the electrolyte solution, and at least one positive electrode terminal post and at least one negative electrode terminal post are arranged on the case. The cell assembly includes one or a plurality of electrode assemblies, and each of the electrode assemblies is formed by stacking or winding a positive electrode plate, a negative electrode plate, and a separator. The material of the case may be aluminum, but is not limited thereto.

The positive electrode plate usually includes a positive electrode current collector and a positive electrode active material layer. The positive electrode active material layer is coated on the positive electrode current collector directly or indirectly. The positive electrode current collector not coated with the positive electrode active material layer protrudes out of the positive electrode current collector coated with the positive electrode active material layer, and the positive electrode current collector not coated with the positive electrode active material layer serves as a positive tab. A plurality of positive tabs are stacked together and are electrically connected to the positive electrode terminal post. For example, the plurality of stacked positive tabs can be directly welded to the positive electrode terminal post to form an electrical connection. Alternatively, the cell assembly may further include a positive electrode adapter plate. The plurality of stacked positive tabs are welded to one end of the positive electrode adapter plate, and the other end of the positive electrode adapter plate is welded to the positive electrode terminal post, to form an electrical connection between the positive tabs and the positive electrode terminal post.

The negative electrode plate includes a negative electrode current collector and a negative electrode active material layer. The negative electrode active material layer is coated on the surface of the negative electrode current collector. The negative electrode current collector not coated with the negative electrode active material layer protrudes out of the negative electrode current collector coated with the negative electrode active material layer, and the negative electrode current collector not coated with the negative electrode active material layer serves as a negative tab. A plurality of negative tabs are stacked together and are electrically connected to the negative electrode terminal post. For example, the plurality of stacked negative tabs can be directly welded to the negative electrode terminal post to form an electrical connection. Alternatively, the cell assembly may further include a negative electrode adapter plate. The plurality of stacked negative tabs are welded to one end of the negative electrode adapter plate, and the other end of the negative electrode adapter plate is welded to the negative electrode terminal post, to form an electrical connection between the negative tabs and the negative electrode terminal post. A material of the separator is not limited, and may be polypropylene, polyethylene, or the like.

In recent years, new energy vehicles have made a leap forward in development. In the field of electric vehicles, batteries, as power sources of electric vehicles, play an irreplaceable and important role. The batteries, as core components of the new energy vehicles, have high requirements for energy densities and reliability.

In the related art, the terminal post of the battery cell is installed in the case, and a part of the terminal post extends into the case, and/or a part of the terminal post extends out of the case, and the terminal post and the case usually need to be insulated and sealed, which easily causes a large height space occupied by the terminal post, and therefore, the energy density of the battery cell is difficult to improve.

Based on the above consideration, in order to prohibit thermal spread of a battery, a case assembly is proposed. The case assembly includes a case, a terminal post, and an insulating sealing structure. The case includes a first case wall, the first case wall being formed with a first accommodating groove, the groove opening of the first accommodating groove being formed on an outer surface or inner surface of the first case wall, and a bottom wall of the first accommodating groove being formed with a mounting through hole. The first terminal post includes a terminal post body passing through the mounting through hole, and a first extension platform connected to the terminal post body and extending relative to the terminal post body in a direction away from a central axis of the mounting through hole, and the first extension platform is arranged on a side of the first case wall where the first accommodating groove is formed. The insulating sealing structure includes a first fitting structure, the first fitting structure being fitted between the first case wall and the first extension platform, and at least a part of the first fitting structure being accommodated in the first accommodating groove.

In the above technical solution, by setting the first extension platform, the structural strength and mounting reliability of the first terminal post can be increased; by accommodating at least a part of the first fitting structure in the first accommodating groove of the first case wall, on the premise that the case provides sufficient arrangement space for a cell assembly of the battery cell, the case can additionally provide arrangement space for at least a part of the first fitting structure. The part of the first fitting structure located in the first accommodating groove may not occupy the arrangement space provided by the case for the cell assembly, or can reduce the occupied space of the case assembly, thereby improving the volumetric energy density of the battery cell.

Embodiments of the present application provide an electrical apparatus that uses a battery of the present disclosure as a power source, and the electrical apparatus may be, but is not limited to, a mobile phone, a tablet, a notebook, an electric toy, an electric tool, a battery vehicle, an electric vehicle, a ship, a spacecraft, and the like. The electric toy includes fixed or mobile electric toys, such as a game machine, an electric vehicle toy, an electric ship toy, an electric airplane toy, and the like. The spacecraft includes an airplane, a rocket, a space shuttle, a spaceship, and the like. The electric tool includes an electric metal cutting tool, an electric grinding tool, an electric assembling tool, an electric tool for railways, for example, an electric drill, an electric grinding machine, an electric wrench, an electric screwdriver, an electric hammer, an electric impact drill, a concrete vibrator, and an electric planer.

For convenience of explanation, the following embodiments take the electrical apparatus 1000 being a vehicle as an example, and describe in detail structures of the electrical apparatus 1000, a battery 200, and a battery cell 100 of the present application.

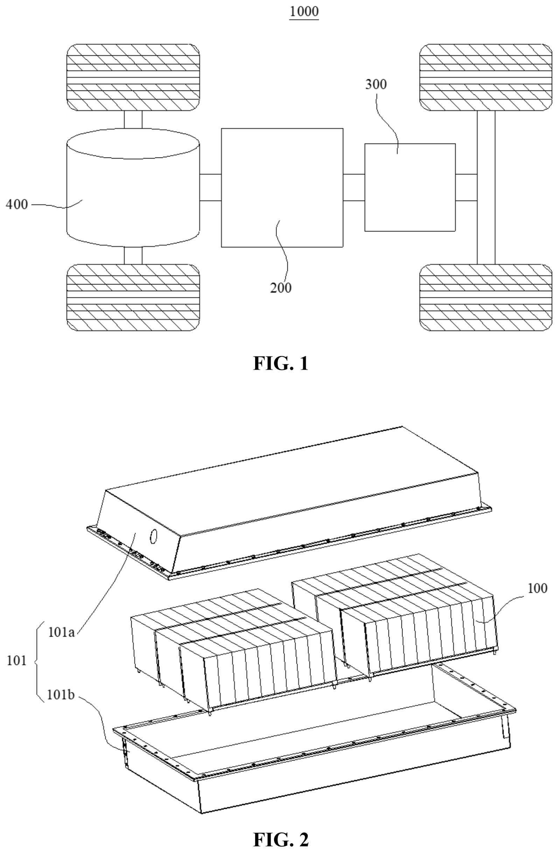

Referring to FIG. 1, FIG. 1 is a schematic structural view of an electrical apparatus 1000 being a vehicle according to some embodiments of the present application. The vehicle may be a fuel vehicle, a gas vehicle, or a new energy vehicle, and the new energy vehicle may be a battery electric vehicle, a hybrid electric vehicle, an extended range vehicle, or the like. A battery 200 is arranged in the vehicle. The battery 200 may be arranged at a bottom or head or tail of the vehicle. The battery 200 may be configured to supply power the vehicle. For example, the battery 200 may be used as an operating power source of the vehicle. The vehicle may further include a controller 300 and a motor 400. The controller 300 is configured to control the battery 200 to supply power to the motor 400, for example, to meet a demand for working power during starting, navigation, and driving of the vehicle. In some embodiments of the present application, the battery 200 may be used not only as an operating power source of the vehicle, but also as a driving power source of the vehicle, replacing or partially replacing fuel or natural gas to provide driving power for the vehicle.

Referring to FIG. 2, FIG. 2 is an exploded structural view of a battery cell 100 used in a battery 200 according to some embodiments of the present application. The battery 200 include a box 101 and a plurality of battery cells 100. The battery cells 100 are accommodated in the box 101. The box 101 is configured to provide an assembling space for the battery cells 100, and the box 101 may be of various structures. In some embodiments, the box 101 includes a first box body 101a and a second box body 101b. The first box body 101a and the second box body 101b cover each other, and the first box body 101a and the second box body 101b together define an accommodating space for accommodating the battery cells. The second box body 101b may be of a hollow structure with one end opened. The first box body 101a may be of a platy structure. The first box body 101a covers an open side of the second box body 101b, so that the first box body 101a and the second box body 101b jointly define the accommodating space. Alternatively, both the first box body 101a and the second box body 101b are of hollow structures with one side opened (for example, as shown in FIG. 2). The open side of the first box body 101a covers the open side of the second box body 101b. Certainly, the box 101 formed by the first box body 101a and the second box body 101b may be in various shapes, such as a cylinder or a cuboid.

In the battery 200, the plurality of battery cells 100 may be connected in series, in parallel, or in parallel-series, and the parallel-series connection means that the plurality of battery cells 100 are connected in both series and parallel. The plurality of battery cells 100 may be directly connected in series, in parallel, or in parallel-series, and then the entirety formed by the plurality of battery cells 100 is accommodated in the box 101. Alternatively, the battery 200 may also be an entirety formed by connecting the plurality of battery cells 100 in series, in parallel, or in parallel-series to form battery modules and then connecting the plurality of battery modules in series, in parallel, or in parallel-series, and is then accommodated in the box 101. The battery 200 may further include other structures. For example, the battery 200 may further include a busbar component 102 for electrically connecting the plurality of battery cells 100.

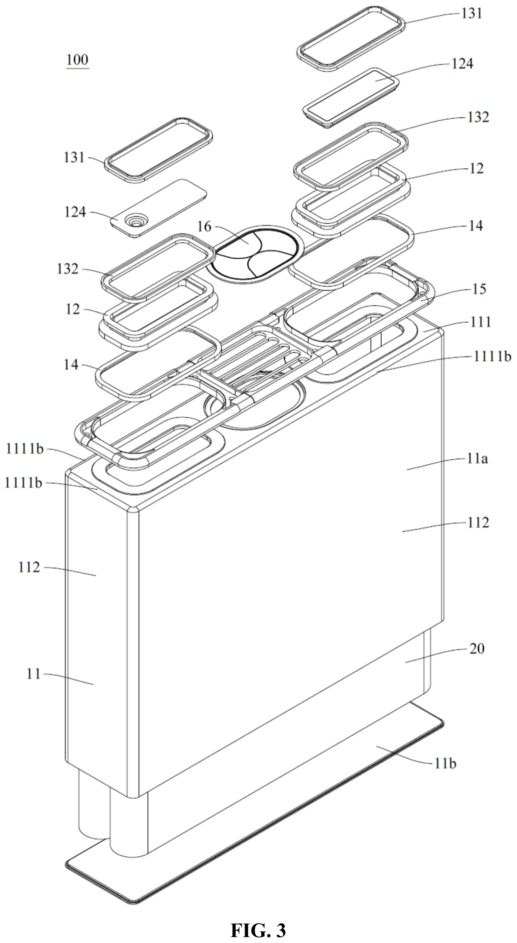

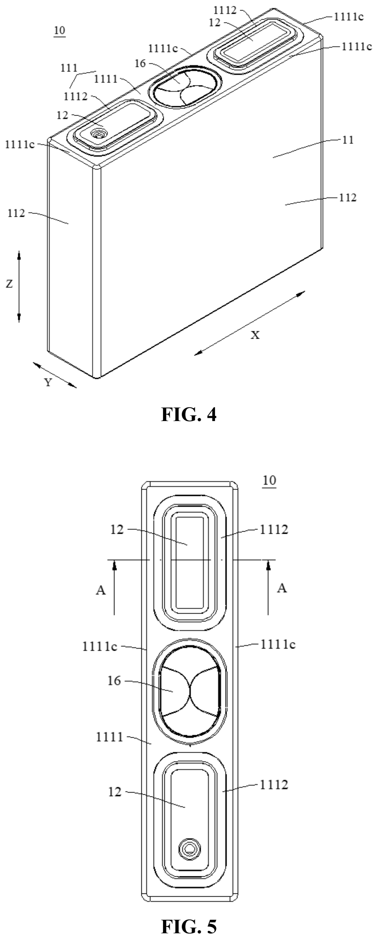

Referring to FIG. 3 and FIG. 4, the battery cell is a cuboid, a height direction of the battery cell is a third direction Z, a length direction of the battery cell is a first direction X, and a thickness direction of the battery cell is a second direction Y. The first direction X, the second direction Y, and the third direction Z are perpendicular to one another. However, it is not limited thereto. In other embodiments of the present application, the battery cell may also be in a shape of a cylinder, a polygonal prism, a flat body, or other shapes.

Referring to FIG. 4 to FIG. 7 and FIG. 10, in the embodiment of the present application, the case assembly 10 includes a case 11 and a first terminal post 12 arranged on the case 11.

The case 11 is provided with terminal posts, and the terminal posts are used to be electrically connected to the cell assembly 20 of the battery cell 100 to achieve normal charging and discharging of the battery cell 100. Generally, there are at least two terminal posts, including at least one positive terminal post and at least one negative terminal post. In the embodiment of the present application, at least one of the plurality of terminal posts on the case 11 is a first terminal post 12, and the first terminal post 12 can be used as a positive terminal post or a negative terminal post. The first terminal post 12 is a terminal post configured to include a terminal post body 121 and a first extension platform 122. That is, all terminal posts on the case 11 are formed as first terminal posts 12, or part of the terminal posts on the case 11 are formed as first terminal posts 12, and the remaining terminal posts on the case 11 are formed as second terminal posts, the second terminal post having a different structure from the first terminal post 12. For the convenience of description, in the following description of the present application, it is taken as an example that all terminal posts on the case 11 are first terminal posts 12.

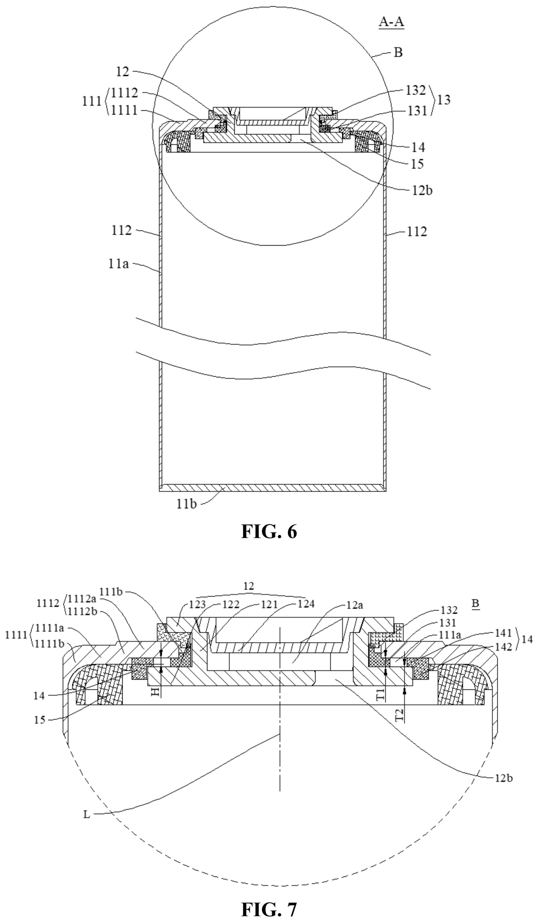

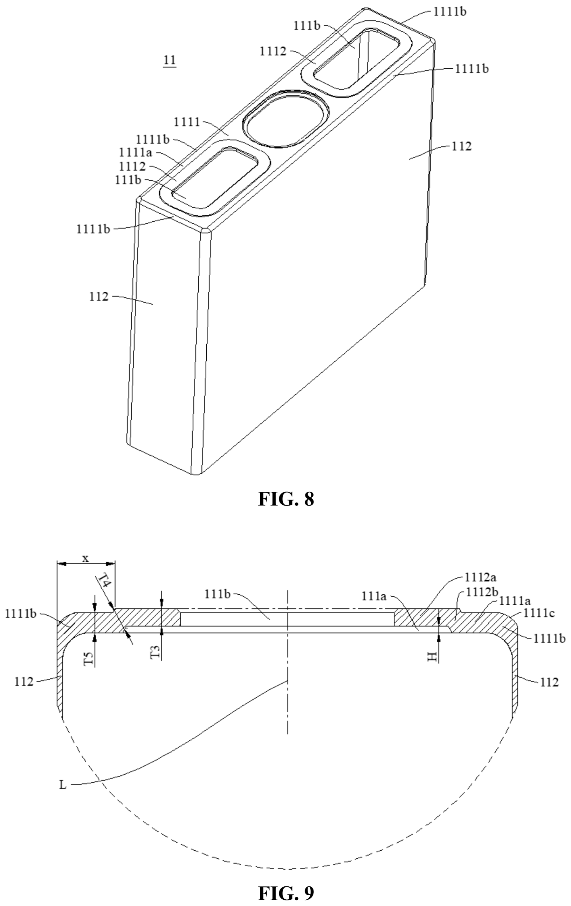

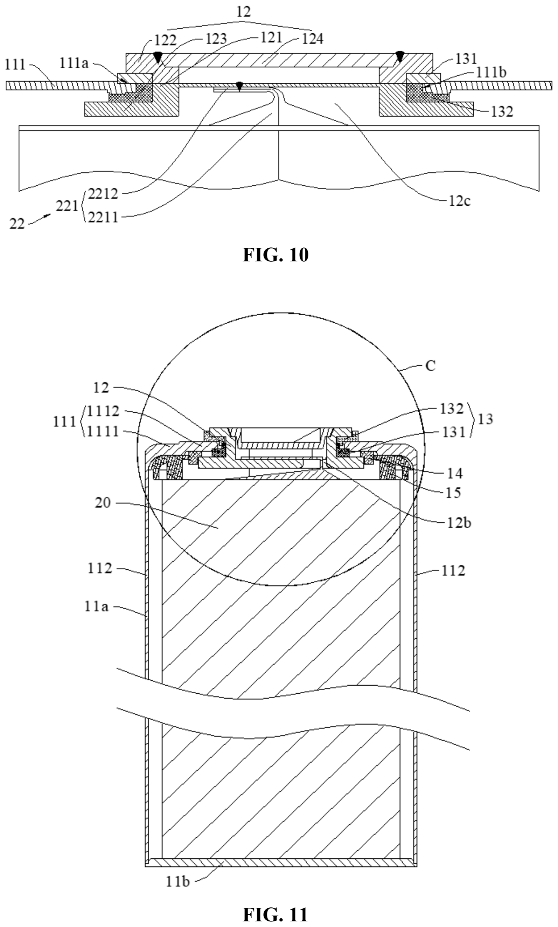

The case 11 includes a first case wall 111, and the first case wall 111 is formed with a first accommodating groove 111a. The groove opening of the first accommodating groove 111a is formed on an outer surface of the first case wall 111 (as shown in FIG. 10), or, the groove opening of the first accommodating groove 111a is formed on an inner surface of the first case wall 111 (as shown in FIG. 7 and FIG. 9). A bottom wall of the first accommodating groove 111a is formed with a mounting through hole 111b. The bottom wall of the first accommodating groove 111a can be understood as a groove wall on one side of the first accommodating groove 111a opposite to its groove opening. The mounting through hole 111b passes through the bottom wall of the first accommodating groove 111a to enable communication between an outer side and an inner side of the case 11.

As can be seen, the first accommodating groove 111a may be located on an outer side of the first case wall 111, or the first accommodating groove 111a may be located on an inner side of the first case wall 111. For example, when the first case wall 111 is a top wall of the case 11, the outer surface of the first case wall 111 is an upper surface of the first case wall 111, and the inner surface of the first case wall 111 is a lower surface of the first case wall 111. When the groove opening of the first accommodating groove 111a is formed on the outer surface of the first case wall 111, the first accommodating groove 111a is located on the outer side of the first case wall 111, and the first accommodating groove 111a can be a groove with the groove opening open upward and the groove wall recessed downward. Alternatively, when the groove opening of the first accommodating groove 111a is formed on the inner surface of the first case wall 111, the first accommodating groove 111a is located on the inner side of the first case wall 111, and the first accommodating groove 111a can be a groove with the groove opening open downward and the groove wall recessed upward. Of course, the first case wall 111 may also be a side wall or a bottom wall of the case 11.

Referring to FIG. 6 and FIG. 7, the first terminal post 12 includes a terminal post body 121 and a first extension platform 122. The terminal post body 121 is inserted into the mounting through hole 111b, that is, at least a part of the terminal post body 121 is located in the mounting through hole 111b, with an axial direction of the mounting through hole 111b being used a projection direction, and a surface perpendicular to the axial direction of the mounting through hole 111b being used as a projection surface. A projection of the terminal post body 121 on the projection surface falls within a projection range of a hole wall of the mounting through hole 111b on the projection surface, so that the terminal post body 121 can be inserted into the mounting through hole 111b. The first extension platform 122 is connected to the terminal post body 121 and extends relative to the terminal post body 121 in a direction away from a central axis L of the mounting through hole 111b. For example, the first extension platform 122 can extend in a radial direction of the mounting through hole 111b and in a direction away from the central axis L of the mounting through hole 111b. The first extension platform 122 is arranged on a side of the first case wall 111 where the first accommodating groove 111a is formed. For example, the groove opening of the first accommodating groove 111a is formed on the outer surface of the first case wall 111, and the first extension platform 122 is arranged on the outer side of the first case wall 111 and can extend to the outer side of the outer surface of the first case wall 111. Alternatively, the groove opening of the first accommodating groove 111a is formed on the inner surface of the first case wall 111, and the first extension platform 122 is arranged on the inner side of the first case wall 111 and can extend to the inner side of the inner surface of the first case wall 111.

As can be seen, the arrangement of the first extension platform 122 can increase the overall structural strength of the first terminal post 12 to a certain extent, improve the reliability of the first terminal post 12, and at the same time help increase a matching area between the first terminal post 12 and the first case wall 111, and improve the matching reliability of the first terminal post 12 and the first case wall 111, thereby improving the mounting reliability of the first terminal post 12.

The two side surfaces of the first case wall 111 in the wall thickness direction are respectively the outer surface and the inner surface, an accommodating cavity is formed inside the case 11, and an active material-coated portion 21 of the battery cell can be accommodated in the accommodating cavity. The inner surface is a side surface of the first case wall 111 facing the accommodating cavity, and the outer surface is a side surface of the first case wall 111 facing away from the accommodating cavity. The side of the outer surface away from the accommodating cavity is the outer side of the outer surface, and the side of the inner surface facing the accommodating cavity is the inner side of the inner surface. "The first extension platform 122 extends to the outer side of the outer surface or the inner side of the inner surface of the first case wall 111" means that: at least a part of the first extension platform 122 is opposite to the first case wall 111, with the axial direction of the mounting through hole 111b being used as the projection direction, and the surface perpendicular to the axial direction of the mounting through hole 111b being used as the projection surface. The projection of the first extension platform 122 on the projection surface and the projection of the first case wall 111 on the projection surface have an intersection region, and a part of the first extension platform 122 corresponding to the intersection region is opposite to the first case wall 111.

For example, in combination with FIG. 7, the first case wall 111 is the top wall of the case 11. If the groove opening of the first accommodating groove 111a is formed on the upper surface of the first case wall 111, the first extension platform 122 extends to an upper side of the upper surface of the first case wall 111, and if the groove opening of the first accommodating groove 111a is formed on the lower surface of the first case wall 111, the first extension platform 122 extends to a lower side of the lower surface of the first case wall 111.

It can be understood that in the embodiment of the present application, there may be one first terminal post 12 on the first case wall 111, in which case there may be a plurality of first case walls 111; or, there may be a plurality of first terminal posts 12 on a single first case wall 111, in which case there may be one or a plurality of first case walls 111.

Referring to FIG. 6 and FIG. 7, in the embodiment of the present application, the case assembly 10 further includes an insulating sealing structure 13. The insulating sealing structure 13 includes a first fitting structure 131. The first fitting structure 131 is fitted between the first case wall 111 and the first extension platform 122. As can be seen, the first fitting structure 131 is sandwiched between the first case wall 111 and the first extension platform 122, so that the first case wall 111 and the first extension platform 122 can be indirectly fitted through the first fitting structure 131 to achieve insulation and sealing between the first case wall 111 and the first extension platform 122.

At least a part of the first fitting structure 131 is accommodated in the first accommodating groove 111a; that is, the first fitting structure 131 can be fully accommodated in the first accommodating groove 111a, or the first fitting structure 131 is partially accommodated in the first accommodating groove 111a.

Taking the bottom wall of the first accommodating groove 111a as a reference, a distance between a side surface of the above-mentioned at least a part of the first fitting structure 131 (that is, the part of the first fitting structure 131 accommodated in the first accommodating groove 111a) facing the bottom wall of the first accommodating groove 111a and the bottom wall of the first accommodating groove 111a is less than a depth H of the first accommodating groove 111a, and a distance between the side surface of the above-mentioned at least a part of the first fitting structure 131 facing away from the bottom wall of the first accommodating groove 111a and the bottom wall of the first accommodating groove 111a is less than or equal to the depth H of the first accommodating groove 111a. Then, in the wall thickness direction of the first case wall 111, the thickness of the above-mentioned at least a part of the first fitting structure 131 is less than or equal to the depth H of the first accommodating groove 111a. For example, when the thickness of the entire first fitting structure 131 is less than or equal to the depth H of the first accommodating groove 111a, the entire first fitting structure 131 can be accommodated in the first accommodating groove 111a. When the thickness of the entire first fitting structure 131 is greater than the depth H of the first accommodating groove 111a, the first fitting structure 131 is partially accommodated in the first accommodating groove 111a.

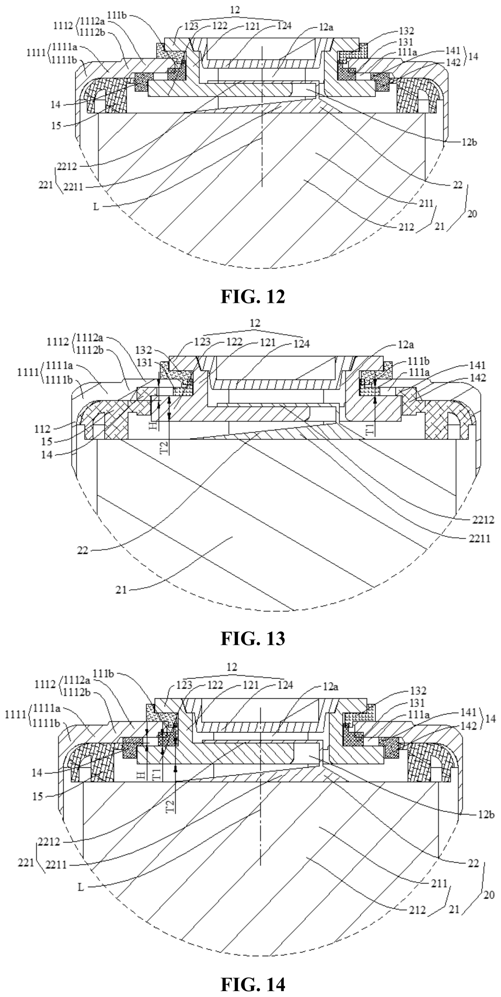

For example, in combination with FIG. 6 and FIG. 7, the first case wall 111 is the top wall of the case 11, and the groove opening of the first accommodating groove 111a is formed on the lower surface of the first case wall 111. At this time, the bottom wall of the first accommodating groove 111a is located above the groove opening of the first accommodating groove 111a. A distance between the groove opening of the first accommodating groove 111a and the bottom wall of the first accommodating groove 111a in a vertical direction is the depth H of the first accommodating groove 111a. The thickness of the first fitting structure 131 in the vertical direction is less than the depth H of the first accommodating groove 111a (as shown in FIG. 13), or the thickness of the first fitting structure 131 in the vertical direction is greater than the depth H of the first accommodating groove 111a (as shown in FIG. 12). Of course, the groove opening of the first accommodating groove 111a can also be formed on the upper surface of the first case wall 111, and the above-mentioned at least a part of the first fitting structure 131 and the first extension platform 122 are both arranged on the upper side of the first case wall 111.

In the above technical solution, by accommodating at least a part of the first fitting structure 131 in the first accommodating groove 111a, so that on the premise that the case 11 provides a sufficient arrangement space for the cell assembly 20 of the battery cell 100, the case 11 can additionally provide an arrangement space for at least a part of the first fitting structure 131. The part of the first fitting structure 131 located in the first accommodating groove 111a will not occupy the arrangement space provided by the case 11 for the cell assembly 20, or can reduce the occupied space of the case assembly 10 without excessively increasing it.

For example, by setting the first accommodating groove 111a on the inner side of the first case wall 111 to accommodate at least a part of the first fitting structure 131, the occupation of the first fitting structure 131 on the arrangement space provided by the case 11 for the cell assembly 20 can be reduced, so that a larger cell assembly 20 can be accommodated in the case 11, which is conducive to improving the volumetric energy density of the battery cell 100. Especially, when the first terminal post 12 is arranged to protrude from the main structural part of the first case wall 111 (for example, including the main body portion 1111 described below) and the height of the first terminal post 12 protruding from the main structural part of the first case wall 111 is fixed, setting the first accommodating groove 111a on the inner side of the first case wall 111 to accommodate at least a part of the first fitting structure 131 is obviously conducive to improving the energy density.

For another example, when the size of the arrangement space provided for the cell assembly 20 inside the case 11 is fixed, by providing the first accommodating groove 111a on the outer side of the first case wall 11 to accommodate at least a part of the first fitting structure 131, the occupation of the external space of the case 11 by the first fitting structure 131 can be reduced. For example, when the first terminal post 12 is arranged to protrude from the outer surface of the first case wall 11, it is conducive to reduce the height of the first terminal post 12 protruding from the first case wall 11, thereby reducing the occupied space of the case assembly 10 and the occupied space of the battery cell 100, which is also conducive to improving the volumetric energy density of the battery cell 10. Then, the battery 100 of the same volume can accommodate a larger number of battery cells 10, thereby further improving the volumetric energy density of the battery 100.

Referring to FIG. 13, in some embodiments, at least a part of the first extension platform 122 is accommodated in the first accommodating groove 111a. That is, the first extension platform 122 can be fully accommodated in the first accommodating groove 111a, or the first extension platform 122 is partially accommodated in the first accommodating groove 111a. In this solution, the groove opening of the first accommodating groove 111a can be formed on the inner surface of the first case wall 111, and the first extension platform 122 is arranged on the inner side of the first case wall 111, as shown in FIG. 13. Alternatively, the groove opening of the first accommodating groove 111a is formed on the outer surface of the first case wall 111, in which case the first extension platform 122 is arranged on the outer side of the first case wall 111, and at least a part of the first extension platform 122 is accommodated in the first accommodating groove 111a.

Taking the bottom wall of the first accommodating groove 111a as a reference, a distance between a side surface of the above-mentioned at least a part of the first extension platform 122 (that is, the part of the first extension platform 122 accommodated in the first accommodating groove 111a) facing the bottom wall of the first accommodating groove 111a and the bottom wall of the first accommodating groove 111a is less than a depth H of the first accommodating groove 111a, and a distance between the side surface of the above-mentioned at least a part of the first extension platform 122 facing away from the bottom wall of the first accommodating groove 111a and the bottom wall of the first accommodating groove 111a is less than or equal to the depth H of the first accommodating groove 111a. Then, in the wall thickness direction of the first case wall 111, the thickness of the above-mentioned at least a part of the first extension platform 122 is less than or equal to the depth H of the first accommodating groove 111a. For example, when the thickness of the entire first extension platform 122 is less than or equal to the depth H of the first accommodating groove 111a, the entire first extension platform 122 can be accommodated in the first accommodating groove 111a. When the thickness of the entire first extension platform 122 is greater than the depth H of the first accommodating groove 111a, the first extension platform 122 is partially accommodated in the first accommodating groove 111a.

In the above technical solution, by arranging at least a part of the first extension platform 122 to be accommodated in the first accommodating groove 111a, so that the case 11 can provide sufficient arrangement space for the cell assembly 20, the case 11 can additionally provide an arrangement space for at least a part of the first extension platform 122, so as to free up more arrangement space for the cell assembly 20, or further reduce the occupied space of the case assembly 10, which is conducive to further improving the volumetric energy density of the battery cell 100.

For example, by setting the first accommodating groove 111a on the inner side of the first case wall 111 to accommodate at least a part of the first fitting structure 131 and at least a part of the first extension platform 122, the occupation of the first fitting structure 131 and the first terminal post 12 on the arrangement space provided by the case 11 for the cell assembly 20 can be reduced, so that a larger cell assembly 20 can be accommodated in the case 11, which is conducive to further improving the volumetric energy density of the battery cell 10. Especially, when the first terminal post 12 is arranged to protrude from the main structural part of the first case wall 111 and the height of the first terminal post 12 protruding from the main structural part of the first case wall 111 is fixed, it is obviously conducive to further improving the energy density.

For another example, when the size of the arrangement space provided for the cell assembly 20 inside the case 11 is fixed, by providing the first accommodating groove 111a on the outer side of the first case wall 11 to accommodate at least a part of the first fitting structure 131 and at least a part of the first extension platform 122, the occupation of the external space of the case 11 by the first fitting structure 131 and the first terminal post 12 can be reduced. For example, when the first terminal post 12 is arranged to protrude from the outer surface of the first case wall 111, it is conducive to reduce the height of the first terminal post 12 protruding from the first case wall 11, thereby further reducing the occupied space of the battery cell 100, and also being conducive to improving the volumetric energy density of the battery cell 10.

For example, in the wall thickness direction of the first case wall 111, the thickness of the at least a part of the first fitting structure 131 is less than the depth H of the first accommodating groove 111a, so that at least a part of the first extension platform 122 is accommodated in the first accommodating groove 111a. Of course, the method of making at least a part of the first extension platform 122 accommodated in the first accommodating groove 111a is not limited to this. For example, the first extension platform 122 needs to form a protruding portion on the side of the first extension platform 122 facing the first case wall 111 due to design requirements, and the protruding portion and the first fitting structure 131 are arranged in sequence in the radial direction of the mounting through hole 111b. In order to improve the energy density of the battery cell, a distance between a side surface of the protruding portion facing the bottom wall of the first accommodating groove 111a and the bottom wall of the first accommodating groove 111a is less than the depth H of the first accommodating groove 111a, so that at least a part of the protruding portion is accommodated in the first accommodating groove 111a. In this case, the thickness of the above-mentioned at least a part of the first fitting structure 131 can be less than, equal to, or greater than the depth H of the first accommodating groove 111a.

In other embodiments of the present application, when the above-mentioned at least a part of the first fitting structure 131 is accommodated in the first accommodating groove 111a, the first extension platform 122 can further be configured to not be accommodated in the first accommodating groove 111a (as shown in FIG. 7 and FIG. 10). For example, in the wall thickness direction of the first case wall 111, the thickness of the above-mentioned at least a part of the first fitting structure 131 is greater the depth H of the first accommodating groove 111a, so that the entire first extension platform 122 is accommodated in the first accommodating groove 111a.

In some embodiments, on a plane perpendicular to the central axis L of the mounting through hole 111b, an orthographic projection of the first extension platform 122 is located within an outer contour range of an orthographic projection of a peripheral wall of the first accommodating groove 111a, that is, on the plane perpendicular to the central axis L of the mounting through hole 111b, the space occupied by the first extension platform 122 is smaller than the accommodating space of the first accommodating groove 111a.

In the above technical solution, by the arrangement on the plane perpendicular to the mounting through hole 111b, the orthographic projection of the first extension platform 122 is located within the outer contour range of the orthographic projection of the peripheral wall of the first accommodating groove 111a, so that at least a part of the first extension platform 122 facing the bottom wall of the first accommodating groove 111a is accommodated in the first accommodating groove 111a, and the first extension platform 122 is not easily interfered with the groove wall of the first accommodating groove 111a, thereby facilitating assembling of the first terminal post 12 and the first case wall 111. Moreover, the above arrangement can further improve the assembling convenience of the first extension platform 122 and the first case wall 111 when the first extension platform 122 is completely accommodated in the first accommodating groove 111a.

In addition, in the above technical solution, there are not too many restrictions on the structure of the first extension platform 122, and therefore, the above arrangement can be applied to first extension platforms 122 of various structural shapes, so as to achieve flexible arrangement of the first terminal post 12. For example, as shown in FIG. 3 and FIG. 7, the first extension platform 122 is formed as an annular flat plate structure. Of course, the first extension platform 122 can also be constructed into a first plate portion and a second plate portion, and a side surface of the first plate portion facing the bottom wall of the first accommodating groove 111a protrudes from the second plate portion toward the first accommodating groove 111a so that the side surface of the first extension platform 122 facing the bottom wall of the first accommodating groove 111a has a step structure, and at least a part of the first fitting structure 131 is fitted between the first case wall 111 and the first plate portion. In this case, at least a part of the first plate portion can be accommodated in the first accommodating groove 111a. On the plane perpendicular to the central axis L of the mounting through hole 111b, an orthographic projection of the first plate portion is located within the outer contour range of the orthographic projection of the peripheral wall of the first accommodating groove 111a, and an orthographic projection of the second plate portion is located within the outer contour range of the orthographic projection of the peripheral wall of the first accommodating groove 111a, or at least a part of the orthographic projection of the second plate portion is located outside the outer contour range of the orthographic projection of the peripheral wall of the first accommodating groove 111a.

Of course, when the first extension platform 122 is configured to be not accommodated in the first accommodating groove 111a, please refer to FIG. 7 and FIG. 10. On the plane perpendicular to the central axis L of the mounting through hole 111b, the orthographic projection of the first extension platform 122 is located within the outer contour range of the orthographic projection of the peripheral wall of the first accommodating groove 111a.

In some embodiments, the first extension platform 122 is located at an axial end of the terminal post body 121, and the first extension platform 122 is located at an end of the terminal post body 121 facing the interior of the case 11. The depth H of the first accommodating groove 111a is greater than a sum of the thickness of the above-mentioned at least a part of the first fitting structure 131 and the thickness of the first extension platform 122 in the axial direction of the mounting through hole 111b, that is, H>T1+T2, where T1 is the thickness of the above-mentioned at least a part of the first fitting structure 131 in the axial direction of the mounting through hole 111b, and T2 is the thickness of the first extension platform 122 in the axial direction of the mounting through hole 111b. In this solution, the groove opening of the first accommodating groove 111a may be formed on the inner surface of the first case wall 111, or may be formed on the outer surface of the first case wall 111.

In the above technical scheme, by arranging the first extension platform 122 at the end of the terminal post body 121 facing the interior of the case 11, and the depth H of the first accommodating groove 111a being greater than the sum of the thickness of the above-mentioned at least a part of the first fitting structure 131 and the thickness of the first extension platform 122 in the axial direction of the mounting through hole 111b, it is conducive to further increasing the accommodating space of the first accommodating groove 111a and improving the accommodating capacity of the first accommodating groove 111a. Therefore, when the case assembly 10 is used for a battery cell 100, the first accommodating groove 111a can also provide arrangement space for other components of the battery cell 100 arranged on the side of the first extension platform 122 facing away from the terminal post body 121, or part of other components arranged on the side of the first extension platform 122 facing away from the terminal post body 121, or the like, so that the above-mentioned other components or the above-mentioned part of other components can be accommodated in the first accommodating groove 111a, so as to free up more arrangement space for the cell assembly 20 or other components outside the case 11, which is conducive to further improving the volumetric energy density of the battery cell 100 or improving the volumetric energy density of the battery 200.

For example, the cell assembly 20 of the battery cell 100 includes an active material-coated portion 21 and a conductive portion 22, the active material-coated portion 21 is arranged in the case 11 and is located on the side of the first extension platform 122 facing away from the terminal post body 121, and the conductive portion 22 electrically connects the active material-coated portion 21 to the first terminal post 12. The groove opening of the first accommodating groove 111a can be formed on the inner surface of the first case wall 111, and a part of the structure of the conductive portion 22 arranged on the side of the first extension platform 122 facing away from the terminal post body 121 is accommodated in the first accommodating groove 111a. In this case, part or all of the conductive portion 22 can be arranged on the side of the first extension platform 122 facing away from the terminal post body 121.

Referring to FIG. 7 to FIG. 9, in some embodiments, the first case wall 111 includes a main body portion 1111 and an accommodating portion 1112. The main body portion 1111 is arranged around the accommodating portion 1112, and the main body portion 1111 is roughly formed into an annular structure. The accommodating portion 1112 includes an end wall 1112a and a side wall 1112b. The end wall 1112a and the side wall 1112b enclose the first accommodating groove 111a. For example, the end wall 1112a can be configured as the bottom wall of the first accommodating groove 111a, and the side wall 1112b can be configured as the peripheral wall of the first accommodating groove 111a. The mounting through hole 111b is formed on the end wall 1112a; where a side surface of the end wall 1112a facing away from the side wall 1112b is arranged to protrude from the surface of the main body portion 1111.

For example, the first case wall 111 is the top wall of the case 11. If the groove opening of the first accommodating groove 111a is formed on the inner surface of the first case wall 111, the end wall 1112a is connected to an upper end of the side wall 1112b, and an upper surface of the end wall 1112a protrudes upward from an upper surface of the main body portion 1111. If the groove opening of the first accommodating groove 111a is formed on the outer surface of the first case wall 111, the end wall 1112a is connected to a lower end of the side wall 1112b, and a lower surface of the end wall 1112a protrudes downward from a lower surface of the main body portion 1111.

In the above technical solution, the first case wall 111 includes the main body portion 1111 and the accommodating portion 1112, the main body portion 1111 is arranged around the accommodating portion 1112, and the accommodating portion 1112 defines the first accommodating groove 111a, so that the first accommodating groove 111a is spaced apart from an outer peripheral edge of the first case wall 111, and the accommodating portion 1112 can be processed by clamping and fixing the main body portion 1111, thereby improving the processing convenience. At the same time, since the side surface of the end wall 1112a facing away from the side wall 1112b protrudes from the surface of the main body portion 1111, it is conducive to appropriately increasing a thickness of the end wall 1112a and improving the structural strength of the end wall 1112d, thereby improving the mounting reliability of the first terminal post 12. At the same time, it can also reduce a difference between the thickness of the end wall 1112a and the thickness of the main body portion 1111, thereby improving the balance of the structural strength of the first case wall 111.

Of course, the embodiments of the present application are not limited to this. In some other embodiments, the first case wall 111 includes a main body portion 1111 and a accommodating portion 1112, the main body portion 1111 is arranged around the accommodating portion 1112, the accommodating portion 1112 includes an end wall 1112a and a side wall 1112b, the end wall 1112a and the side wall 1112b enclose the first accommodating groove 111a, the mounting through hole 111b is formed on the end wall 1112a, and a side surface of the end wall 1112a facing away from the side wall 1112b is arranged to be flush with a surface of the main body portion 1111.

In the above technical solution, the main body portion 1111 is arranged around the accommodating portion 1112, which is also convenient for processing the accommodating portion 1112 by clamping and fixing the main body portion 1111, thereby improving the processing convenience. Because the side surface of the end wall 1112a facing away from the side wall 1112b is arranged to be flush with the surface of the main body portion 1111, the material of the first case wall 111 can be saved and the cost can be reduced under the premise that the first terminal post 12 is reliably installed.

Referring to FIG. 9, in some embodiments, a thickness T3 of the end wall 1112a and a thickness T4 of the side wall 1112b are both greater than or equal to a thickness T5 of the main body portion 1111, that is, T3 ≥ T5 and T4 ≥ T5.

In the above technical solution, by setting the thickness of the end wall 1112a and the thickness of the side wall 1112b to be greater than or equal to the thickness of the main body portion 1111, a difference between a wall thickness of the accommodating portion 1112 and a wall thickness of the main body portion 1111 can be further reduced. At the same time, distribution of a material corresponding to the first case wall 111 can be made more reasonable, which is conducive to improving the mounting reliability of the first terminal post 12.

For example, when the thickness of the end wall 1112a is consistent with the thickness of the main body portion 1111, a height of the surface of the end wall 1112a that faces away from the side wall 1112b protruding from the surface of the main body portion 1111 can be basically consistent with the depth H of the first accommodating groove 111a. When the thickness of the end wall 1112a is greater than the thickness of the main body portion 1111, the height of the surface of the end wall 1112a that faces away from the side wall 1112b protruding from the surface of the main body portion 1111 can be greater than the depth H of the first accommodating groove 111a.

Referring to FIG. 9, in some embodiments, the main body portion 1111 and the accommodating portion 1112 are an integral structure formed by stamping or stretching.

In the above technical solution, by arranging the main body portion 1111 and the accommodating portion 1112 as the integrated structure formed by stamping or stretching, the processing and molding of the first case wall 111 is facilitated. At the same time, there is no need to arrange a connecting structure between the main body portion 1111 and the accommodating portion 1112, so as to simplify the structure of the first case wall 111 and reduce the occupation of the first case wall 111 on the internal space or external space of the case 11.

For example, the thickness T3 of the end wall 1112a and the thickness T4 of the side wall 1112b are both greater than or equal to a thickness T5 of the main body portion 1111, and the main body portion 1111 and the accommodating portion 1112 are an integral structure formed by stamping and stretching. Then, the relationship between the thickness of the end wall 1112a, the thickness of the side wall 1112b, and the thickness of the main body portion 1111 can just match the above-mentioned molding method of the first case wall 111. There is no need to extrude part of the material of the first case wall 111 into the accommodating portion 1112 through a special process during the molding of the accommodating portion 1112, which reduces the difficulty of molding and does not affect the size of other parts of the first case wall 111.

Referring to FIG. 9, in some embodiments, a minimum distance x between an outer peripheral edge of the accommodating portion 1112 and an outer peripheral edge of the main body portion 1111 is greater than 0.5 mm, and a minimum distance between the an inner peripheral edge and the outer peripheral edge of the main body portion 1111 in a radial direction of the mounting through hole 111b is greater than 0.5 mm.

In the above technical solution, by setting the minimum distance between the outer peripheral edge of the accommodating portion 1112 and the outer peripheral edge of the main body portion 1111 to be greater than 0.5 mm, the main body portion 1111 can be subjected to a flanging operation during the molding of the accommodating portion 1112 so as to achieve a sufficient flange width, thereby improving the operational feasibility of stretching or stamping the accommodating portion 1112. At the same time, it is conducive to improving the regularity of the shape of the accommodating portion 1112 and preventing the main body portion 1111 from being deformed.

For example, the minimum distance between the outer peripheral edge of the accommodating portion 1112 and the outer peripheral edge of the main body portion 1111 may be 0.52 mm, 0.55 mm, 0.57 mm, 0.6 mm, 0.7 mm, 1 mm, or the like.

For example, when there is one first terminal post 12 on the first case wall 111, there may be one accommodating portion 1112, and the minimum distance between the outer peripheral edge of the accommodating portion 1112 and the outer peripheral edge of the main body portion 1111 is greater than 0.5 mm. When there are a plurality of first terminal posts 12 on the first case wall 111, there may be a plurality of accommodating portions 1112, and for each accommodating portion 1112, a minimum width of the part of the main body portion 1111 connected to the accommodating portion 1112 and surrounding the accommodating portion 1112 is greater than 0.5 mm, and a minimum width of the part of the main body portion 1111 located between two adjacent accommodating portions 1112 is greater than 0.5 mm.

Then, when another component such as an explosion-proof valve 16 is further arranged on the first case wall 111, a minimum width of the part of the main body portion 1111 located between the accommodating portion 1112 and the other component is also greater than 0.5 mm. In short, for the accommodating portion 1112, the part of the main body portion 1111 that is connected to the accommodating portion 1112 and surrounds the accommodating portion 1112 reserves a width of at least 0.5 mm for the accommodating portion 1112.

Referring to FIG. 4 and FIG. 9, in some embodiments, the case 11 further includes a second case wall 112 adjacent to the first case wall 111, and at least a part of an outer surface of the main body portion 1111 is formed as a fillet surface 1111c, and the fillet surface 111 1c is connected to an outer surface of the second case wall 112.

As can be seen, in the radial direction of the mounting through hole 111b, a minimum width of the part of the main body portion 1111 located between the outer peripheral edge of the accommodating portion 1112 and the corresponding second case wall 112 is greater than or equal to a radial width of the fillet surface 1111c.

In the above technical solution, by setting at least a part of the outer surface of the main body portion 1111 to be formed as the fillet surface 1111c, the minimum distance between the inner peripheral edge and the outer peripheral edge of the main body portion 1111 in the radial direction of the mounting through hole 111b is greater than or equal to the radial width of the fillet surface 1111c, so that a part of the main body portion 1111 connected to the accommodating portion 1112 and surrounding the accommodating portion 1112 reserves the radial width of the fillet surface 1111c for the accommodating portion 1112, and therefore, during the molding of the accommodating portion 1112, the main body portion 1111 can be flanged to achieve a sufficient flange width, thereby improving the operational feasibility of stretching or stamping the accommodating portion 1112.

For example, an accommodating portion 1112 is formed on the first case wall 111, and the outer surface of the main body portion 1111 is formed as a fillet surface 1111c. An outer peripheral edge of the accommodating portion 1112 is transitionally connected to the outer surface of the second case wall 112 through the fillet surface 1111c. During the molding of the accommodating portion 1112, the part corresponding to the fillet surface 1111c can be subjected to a flanging operation. A part of the outer surface of the main body portion 1111 is formed as the fillet surface 1111c, which is conducive to appropriately increasing a distance in a radial direction of the mounting through hole 111b between the outer peripheral edge of the accommodating portion 1112 and the second case wall 112, so as to further improve the convenience of flanging.

It can be understood that the second case wall 112 and the first case wall 111 can be an integrally formed component or a separate structural component.

In some embodiments, the first case wall 111 is an integrally formed cover plate, and the first case wall 111 is connected to the second case wall 112 by fixing means. Alternatively, as shown in FIG. 4 and FIG. 6, there is one or a plurality of second case walls 112, the first case wall 111 is integrally formed with at least one second case wall 112, and the second case wall 112 extends toward one side in the thickness direction of the first case wall 111.

For example, when the first case wall 111 is rectangular, each of four edges of the first case wall 111 is respectively provided with a second case wall 112, and the four second case walls 112 are respectively connected to the first case wall 111 by fixing means, or at least one of the four second case walls 112 is a component integrally formed with the first case wall 111. When the first case wall 111 is circular, the second case wall 112 can be cylindrical, and in this case, the second case wall 112 can be integrally or separately arranged with the first case wall 111.

For example, in combination with FIG. 3, the case 11 may include a case body 11a and a cover plate 11b, the case body 11a is an integral component and defines a space open on one side, and the cover plate 11b is arranged on the open side of the case body to form an accommodating cavity between the case body 11a and the cover plate 11b. In this case, a side surface of the case body 11a opposite to the cover plate 11b is the first case wall 111, and a wall surface of the case body 11a connected between the first case wall 111 and the cover plate 11b is the second case wall 112. Alternatively, the side surface of the case body 11a opposite to the cover plate 11b is the second case wall 112, and a wall surface of the case body 11a connected between the second case wall 112 and the cover plate 11b is the first case wall 111. Alternatively, the cover plate 11b is the first case wall 111. All the above cases are acceptable. For another example, the case 11 may include a case body, a first cover plate, and a second cover plate. The case body is an integral component and defines a space open on two opposite sides. The first cover plate and the second cover plate are respectively arranged on the two opposite open sides of the case body. The first case wall 111 may be a wall surface of the case body, a wall surface of the case body connected to the first case wall 111 is the second case wall, and the first cover plate and the second cover plate are also the second case wall 112.

Referring to FIG. 7 to FIG. 9, in some embodiments, the main body portion 1111 includes a flat portion 1111a and a fillet portion 1111b. The flat portion 1111a is connected to the second case wall 112 through the fillet portion 1111b, and an outer surface of the fillet portion 1111b forms a fillet surface 1111c. As can be seen, in the radial direction of the mounting through hole 111b, the flat portion 1111a is arranged on a radial inner side of the fillet portion 1111b, and the flat portion 1111a is arranged around the accommodating portion 1112.

In the above technical solution, by arranging the main body portion 1111 to include the flat portion 1111a and the fillet portion 1111b, the flat portion 1111b being connected to the second case wall 112 through the fillet portion 1111b, it is conducive to appropriately increasing a minimum width of a part of the main body portion 1111 located between the outer peripheral edge of the accommodating portion 1112 and the corresponding second case wall 112, so that during the flanging operation, the main body portion 1111 can provide a large flange width, so as to further improve the convenience of flanging.

For example, the first case wall 111 is a rectangular plate-shaped structure, each of the four edges of the flat portion 1111a is provided with a fillet portion 1111b, and the flat portion 1111a is connected to the four second case walls 112 respectively through the four fillet portions 1111b.

Referring to FIG. 6 and FIG. 7, in some embodiments, the groove opening of the first accommodating groove 111a is formed on the inner surface of the first case wall 111, and in the radial direction of the mounting through hole 111b, the first fitting structure 131 is spaced apart from the outer peripheral edge of the first extension platform 122. The case assembly 10 further includes: an insulating structure 14, and the insulating structure 14 is arranged at the outer peripheral edge of the first extension platform 122 and is at least partially fitted between the first extension platform 122 and the first case wall 111.

As can be seen, the insulating structure 14 can separate the outer peripheral edge of the first extension platform 122 from the first case wall 111 to achieve an insulation arrangement between the outer peripheral edge of the first extension platform 122 and the first case wall 111.

In the above technical solution, the first fitting structure 131 and the outer peripheral edge of the first extension platform 122 are spaced apart in the radial direction of the mounting through hole 111b. Since the first fitting structure 131 is not only used for insulation arrangement but also for sealing, it is conducive to reducing the difficulty of installing the first fitting structure 131 on the premise of achieving a sealed arrangement between the first terminal post 12 and the first case wall 11. In addition, the insulating structure 14 is arranged at the outer peripheral edge of the first extension platform 122, and at least a part of the insulating structure 14 is fitted between the first extension platform 122 and the first case wall 111, so as to improve the insulation reliability between the first extension platform 122 and the first case wall 111, and reduce the risk of short circuit caused by the outer peripheral edge of the first extension platform 122 and the first case wall 111 being easily contacted due to the large deformation of the first fitting structure 131, thereby improving the safety of the battery cell 100.

Of course, the embodiments of the present application are not limited thereto. In some other embodiments, in the radial direction of the mounting through hole 111b, the first fitting portion 131 extends to the outer peripheral edge of the first extension platform 122, and in this case, the insulating structure 14 may not be required.

Referring to FIG. 7, in some embodiments, on a plane perpendicular to the central axis L of the mounting through hole 111b, the orthographic projection of the first extension platform 122 is located within the outer contour range of the orthographic projection of the peripheral wall of the first accommodating groove 111a, so as to appropriately reduce the extension width of the first extension platform 122 and reduce costs on the premise of achieving reliable mounting of the first terminal post 12. At the same time, if at least a part of the first extension platform 122 needs to be accommodated in the first accommodating groove 111a, the above arrangement facilitates the assembling of the first extension platform 122 with the first case wall 111. Of course, the above arrangement can also be used without accommodating at least a part of the first extension platform 122 in the first accommodating groove 111a.

In combination with FIG. 7, the insulating structure 14 includes a first insulating portion 141 and a second insulating portion 142 connected to each other. The first insulating portion 141 is fitted between the bottom wall of the first accommodating groove 111a and the first extension platform 122, the second insulating portion 142 is arranged around the first extension platform 122, and the second insulating portion 142 covers at least a part of the outer peripheral wall of the first extension platform 122.

In the above technical solution, the insulating structure 14 including the first insulating portion 141 and the second insulating portion 142 is arranged, so as to enhance an insulating protection effect of the insulating structure 14 on the first extension platform 122, reduce the risk of contact between the first extension platform 122 and the peripheral wall and bottom wall of the first accommodating groove 111a, and further enhance the insulation reliability between the first extension platform 122 and the first case wall 111.

Referring to FIG. 7 and FIG. 12, in some embodiments, the case assembly 10 further includes a bracket 15, the bracket 15 is arranged in the case 11, and the bracket 15 is suitable for cooperating with the cell assembly 20 of the battery cell 100 to separate the active material-coated portion 21 of the cell assembly 20 from the first case wall 111.

The bracket 15 and the insulating structure 14 are an integral component; or, the bracket 15 and the insulating structure 14 are separate components that are connected.

In the above technical solution, by arranging the bracket 15 inside the case 11, when the case assembly 10 is used in the battery cell 100, the bracket 15 can separate the active material-coated portion 21 from the first case wall 111, so as to improve the reliability and assembling convenience of the battery cell 100, and the bracket 15 and the insulating structure 14 are flexibly arranged to better adapt to differentiated needs of the battery cell 100.

For example, the bracket 15 is a plastic part. For example, when the bracket 15 and the insulating structure 14 are separate components, the bracket 15 and the insulating structure 14 can be snap-connected, plug-connected, and the like.

For example, on the plane perpendicular to the central axis of the mounting through hole 111b, the orthographic projection of the active material-coated portion 21 is located within the outer contour range of the orthographic projection of the bracket 15. In the assembling process of the battery cell 100, the bracket 15 and the cell assembly 20 can be pre-mounted first, and then the pre-mounted structure formed by the bracket 15 and the cell assembly 20 is loaded into the case 11 together. When entering the case, the bracket 15 can be located in front of the active material-coated portion 21, so that the bracket 15 enters the case before the active material-coated portion 21. The bracket 15 can protect the active material-coated portion 21 and reduce the probability of the active material-coated portion 21 being scratched and damaged by the case 11.

Furthermore, the battery cell 100 may include an insulating film, and the insulating film is arranged in the case 11 and wraps the active material-coated portion 21. The insulating film is connected to the bracket 15 so that the insulating film and the bracket 15 can provide all-round protection for the active material-coated portion 21, improve the insulation reliability between the active material-coated portion 21 and the case 11, and further reduce the risk of the active material-coated portion 21 being scratched by the case 11 during the case-put-in process.

Referring to FIG. 7. in some embodiments, the first terminal post 12 further includes a second extension platform 123, and the second extension platform 123 is connected to the terminal post body 121 and extends relative to the terminal post body 121 in a direction away from the central axis L of the mounting through hole 111b. The second extension platform 123 and the first extension platform 122 extend to the inner and outer sides of the first case wall 111 respectively. As can be seen, when the first extension platform 122 extends to the outer side of the outer surface of the first case wall 111, the second extension platform 123 extends to the inner side of the inner surface of the first case wall 111, and when the first extension platform 122 extends to the inner side of the inner surface of the first case wall 111, the second extension platform 123 extends to the outer side of the outer surface of the first case wall 111.

For example, the first case wall 111 is the top wall of the case 11. If the groove opening of the first accommodating groove 111a is formed on the upper surface of the first case wall 111, the first extension platform 122 extends to the upper side of the upper surface of the first case wall 111, and the second extension platform 123 extends to the lower side of the lower surface of the first case wall 111; and if the groove opening of the first accommodating groove 111a is formed on the lower surface of the first case wall 111, the first extension platform 122 extends to the lower side of the lower surface of the first case wall 111, and the second extension platform 123 extends to the upper side of the upper surface of the first case wall 111.

In combination with FIG. 7, the insulating sealing structure 13 includes a second fitting structure 132, and the second fitting structure 132 is fitted between the first case wall 111 and the second extension platform 123. The second fitting structure 132 is sandwiched between the first case wall 111 and the first extension platform 122, so that the first case wall 111 and the second extension platform 123 can be indirectly fitted through the second fitting structure 132 to achieve insulation and sealing between the first case wall 111 and the second extension platform 123.

In the above technical solution, the first terminal post 12 is further provided with the second extension platform 123 connected to the terminal post body 121 and extending relative to the terminal post body 121 in the direction away from the central axis L of the mounting through hole 111b. The second extension platform 123 and the first extension platform 122 extend to the inner and outer sides of the first case wall 111 respectively, so as to further improve the structural strength of the first terminal post 12, so that the first terminal post 12 is position-limitedly fitted at the mounting through hole 111b through the first extension platform 122 and the second extension platform 123, which is conducive to improving the mounting reliability of the first terminal post 12. At the same time, insulation and sealing between the first case wall 111 and the second extension platform 123 are realized through the second fitting structure 132, thereby improving the reliability of the battery cell 100.

In some embodiments, as shown in FIG. 7, the first extension platform 122 extends to the inner side of the inner surface of the first case wall 111, the second extension platform 123 extends to the outer side of the outer surface of the first case wall 111, and the first terminal post 12 is formed by flanging and riveting to form the second extension platform 123. Specifically, after the first terminal post 12 is assembled to the mounting through hole 111b through the terminal post body 121, the second extension platform 123 is manufactured by flanging and riveting, so as to realize riveting and fixing of the first terminal post 12 and the first case wall 111, and the assembling is convenient and reliable.

Of course, the present application is not limited to this. For example, in other embodiments of the present application, the first terminal post 12 includes a terminal post body 121, a first extension platform 122, and a second extension platform 123. The first terminal post 12 can also be formed by welding two parts together. For example, the two parts are respectively assembled to the mounting through hole 111b, and then the two parts are welded together. One part may include a part of the terminal post body 121 and the first extension platform 122, and the other part may include the other part of the terminal post body 121 and the second extension platform 123.

In some embodiments, the first case wall 111 is further formed with a second accommodating groove (not shown in the figure), the groove opening of the first accommodating groove 111a is formed on the inner surface of the first case wall 111, a groove opening of the second accommodating groove is formed on the outer surface of the first case wall 111, the second extension platform 123 extends to the outer side of the outer surface of the first case wall 111, and at least a part of the second fitting structure 132 is accommodated in the second accommodating groove. That is, the second fitting structure 132 can be completely accommodated in the second accommodating groove, or, the second fitting structure 132 can be partially accommodated in the second accommodating groove.

Taking the bottom wall of the second accommodating groove as a reference, a distance between a side surface of the above-mentioned at least a part of the second fitting structure 132 (that is, the part of the second fitting structure 132 accommodated in the second accommodating groove) facing the bottom wall of the second accommodating groove and the bottom wall of the second accommodating groove is less than a depth of the second accommodating groove, and a distance between the side surface of the above-mentioned at least a part of the second fitting structure 132 facing away from the bottom wall of the second accommodating groove and the bottom wall of the second accommodating groove is less than or equal to the depth of the second accommodating groove. Then, in the wall thickness direction of the first case wall 111, the thickness of the above-mentioned at least a part of the second fitting structure 132 is less than or equal to the depth of the second accommodating groove.

For example, when the first case wall 111 is formed with the first accommodating groove 111a and the second accommodating groove, the first accommodating groove and the second accommodating groove can be arranged back to back in the wall thickness direction of the first case wall 111, and the bottom wall of the first accommodating groove 111a is at least a part of the bottom wall of the second accommodating groove, or the bottom wall of the second accommodating groove is at least a part of the bottom wall of the first accommodating groove 111a. That is, on the plane perpendicular to the central axis L of the mounting through hole 111b, the orthographic projection of the peripheral wall of the first accommodating groove 111a and the orthographic projection of the peripheral wall of the second accommodating groove can be radially spaced apart, or at least partially overlapped.

In the above technical solution, by accommodating at least a part of the second fitting structure 132 in the second accommodating groove, it is conducive to simultaneously reducing the occupation of the first fitting structure 131 and the second fitting structure 132 on the arrangement space provided for the cell assembly 20 inside the case 11, and reducing the occupation of the first fitting structure 131 and the second fitting structure 132 on the space outside the case 11, thereby facilitating further improvement of the volumetric energy density of the battery cell 100.

In a second aspect, an embodiment of the present application provides a battery cell 100, including a cell assembly 20 and the above-mentioned case assembly 10. The cell assembly 20 includes an active material-coated portion 21 and a conductive portion 22, the active material-coated portion 21 is arranged in a case 11, the active material-coated portion 21 is a portion of the cell assembly 20 coated with an active material, and can assist in deintercalation of metal ions during charging and discharging of the battery cell 100, the conductive portion 22 electrically connects the active material-coated portion 21 and the first terminal post 12, and the conductive portion 22 is not coated with an active material.

It is understandable that both a first terminal post 12 and a second terminal post can be electrically connected to the active material-coated portion 21 through the corresponding conductive portion 22 to achieve normal charging and discharging of the battery cell 100.

It should be noted that, in the embodiment of the present application, the active material-coated portion 21 can be divided into a positive electrode active material-coated portion and a negative electrode active material-coated portion, the positive electrode active material-coated portion includes a portion of a positive electrode current collector coated with a positive electrode active material layer 212, and the negative electrode active material-coated portion includes a portion of a negative electrode current collector coated with a negative electrode active material layer 212. The conductive portion 22 is divided into a positive conductive portion and a negative conductive portion. The positive conductive portion electrically connects the positive active material-coated portion and a positive electrode terminal post, and the negative conductive portion electrically connects the negative active material-coated portion and a negative electrode terminal post.

Obviously, the first accommodating groove 111a can be located on the side of the first case wall 111 facing away from the active material-coated portion 21, that is, the groove opening of the first accommodating groove 111a is formed on a side surface of the first case wall 111 facing away from the active material-coated portion 21 (that is, the outer surface of the first case wall 111). Alternatively, the first accommodating groove 111a is located on the side of the first case wall 111 facing the active material-coated portion 21, that is, the groove opening of the first accommodating groove 111a is formed on a side surface of the first case wall 111 facing the active material-coated portion 21 (that is, the inner surface of the first case wall 111).

In the above technical solution, the battery cell 100 adopts the above-mentioned case assembly 10, which can improve the volumetric energy density of the battery cell 100.

It is understandable that in the embodiment of the present application, the shape of the case 11 is adjusted according to the type of the battery cell 100. For example, when the battery cell 100 is a square battery, the case 11 is square, and when the battery cell 100 is a cylindrical battery, the case 11 is cylindrical.

Referring to FIG. 11 and FIG. 12, in a first implementation, an active material-coated portion 21 includes a current collector 211 and an active material layer 212 arranged on the current collector 211. A conductive portion 22 includes a tab portion 221 electrically connected to the current collector 211. The tab portion 221 includes a plurality of tabs. The plurality of tabs converge at positions close to the current collector 211 (that is, gather in a direction close to each other) to form a first converged portion 2211, and the plurality of tabs converge at positions away from the current collector 211 and are connected to form a second converged portion 2212. The first converged portion 2211 connects the second converged portion 2212 and the active material-coated portion 21.

As can be seen, the plurality of tabs are only converged together but not connected when forming the first converged portion, while the plurality of tabs are not only converged together but also connected into an integrated structure when forming the second converged portion 2212. For example, the plurality of tabs are connected into an integrated plate structure by welding, conductive adhesive bonding, and the like to form the second converged portion 2212.

Here, "the plurality of tabs converge at positions close to the current collector 211 to form a first converged portion 2211, and the plurality of tabs converge at positions away from the current collector 211 and are connected to form a second converged portion 2212" can be understood as, in an extension direction of the tabs, the first converged portion 2211 and the second converged portion 2212 are sequentially arranged in a direction away from the current collector 211. The tab and the current collector 211 may be an integral component or separate components.

It should be noted that in the embodiments of the present application, the tabs are respectively positive tabs and negative tabs. The positive tabs that need to be converged together are stacked and pre-welded to form a second converged portion of the positive electrode to reduce an interlayer gap so that the plurality of fluffy positive tabs form a plate structure with a certain rigidity. Similarly, the negative tabs are also processed as described above.

In combination with FIG. 14, the groove opening of the first accommodating groove 111a is formed on the inner surface of the first case wall 111, and at least a part of the second converged portion 2212 is accommodated in the first accommodating groove 111a, that is, part or all of the second converged portion 2212 can be accommodated in the first accommodating groove 111a.

Taking the bottom wall of the first accommodating groove 111a as a reference, a distance between one end of the above-mentioned at least a part of the second converged portion 2212 (that is, the part of the second converged portion 2212 accommodated in the first accommodating groove 111a) facing the bottom wall of the first accommodating groove 111a and the bottom wall of the first accommodating groove 111a is less than the depth H of the first accommodating groove 111a, and a distance between one end of the above-mentioned at least a part of the second converged portion 2212 facing away from the bottom wall of the first accommodating groove 111a and the bottom wall of the first accommodating groove 111a is less than or equal to the depth H of the first accommodating groove 111a. Then, in the wall thickness direction of the first case wall 111, the thickness of the above-mentioned at least a part of the second converged portion 2212 is less than or equal to the depth of the first accommodating groove 111a.

In the above technical solution, by arranging the plurality of tabs to converge at the position close to the current collector 211 to form the second converged portion 2212, at least a part of the second converged portion 2212 being accommodated in the first accommodating groove 111a, the occupation of the tab portion 221 on the arrangement space provided for the cell assembly 20 inside the case 11 is reduced, which is conducive to further improving the volumetric energy density of the battery cell 100.

It is understandable that in the first implementation, when at least a part of the second converged portion 2212 is accommodated in the first accommodating groove 111a, in this case, the embodiments of the present application may include the following solutions: 1. At least a part of the first fitting structure 131 is accommodated in the first accommodating groove 111a, and the first extension platform 122 is not accommodated in the first accommodating groove 111a; 2. At least a part of the first fitting structure 131 and at least a part of the first extension platform 122 are both accommodated in the first accommodating groove 111a.

Of course, in other embodiments, in the first implementation, the second converged portion 2212 may further be accommodated outside the first accommodating groove 111a, and in this case, the embodiments of the present application may include the following solutions: 1. At least a part of the first fitting structure 131 is accommodated in the first accommodating groove 111a, and the first extension platform 122 is not accommodated in the first accommodating groove 111a; 2. At least a part of the first fitting structure 131 and at least a part of the first extension platform 122 are both accommodated in the first accommodating groove 111a.

In other words, the arranging position of the second converged portion 2212 has no direct connection with the arranging position of the first extension platform 122. In the axial direction of the mounting through hole 111b, the second converged portion 2212 can be provided on the side of the first extension platform 122 facing away from the active material-coated portion 21, or the second converged portion 2212 can be provided on the side of the first extension platform 122 facing the active material-coated portion 21, or the second converged portion 2212 is arranged to be basically aligned with the first extension platform 122.

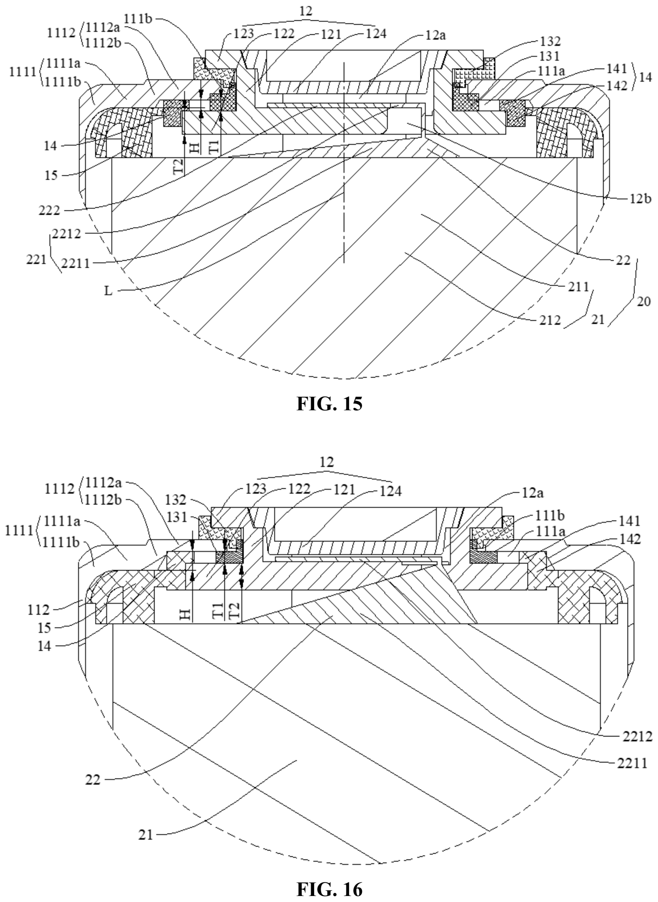

Referring to FIG. 15, in some embodiments, the conductive portion 22 further includes an adapter plate 222, the adapter plate 222 is connected to the second converged portion 2212. The conductive portion 22 is electrically connected to the first terminal post 12 through the adapter plate 222. At least a part of the adapter plate 222 is accommodated in the first accommodating groove 111a. Then, all or part of the adapter plate 222 can be accommodated in the first accommodating groove 111a.

Taking the bottom wall of the first accommodating groove 111a as a reference, a distance between one end of the above-mentioned at least a part of the adapter plate 222 (that is, the part of the adapter plate 222 accommodated in the first accommodating groove 111a) facing the bottom wall of the first accommodating groove 111a and the bottom wall of the first accommodating groove 111a is less than the depth H of the first accommodating groove 111a, and a distance between one end of the above-mentioned at least a part of the adapter plate 222 facing away from the bottom wall of the first accommodating groove 111a and the bottom wall of the first accommodating groove 111a is less than or equal to the depth H of the first accommodating groove 111a. Then, in the wall thickness direction of the first case wall 111, the thickness of the above-mentioned at least a part of the adapter plate 222 is less than or equal to the depth of the first accommodating groove 111a.

In the above technical solution, by arranging the second converged portion 2212 to be indirectly electrically connected to the first terminal post 12 through the adapter plate 222, at least a part of the adapter plate 222 being accommodated in the first accommodating groove 111a, the occupation of the conductive portion 22 on the arrangement space provided for the cell assembly 20 inside the case 11 is reduced, which is conducive to further improving the volumetric energy density of the battery cell 100.

As can be seen, in the first implementation, the second converged portion 2212 can be directly electrically connected to the first terminal post 12, or the second converged portion 2212 can be indirectly electrically connected to the first terminal post 12 through the adapter plate 222.

It is understandable that, when at least a part of the adapter plate 222 is accommodated in the first accommodating groove 111a, in this case, the embodiments of the present application may include the following solutions: 1. At least a part of the first fitting structure 131 is accommodated in the first accommodating groove 111a, and the first extension platform 122 is not accommodated in the first accommodating groove 111a; 2. At least a part of the first fitting structure 131 and at least a part of the first extension platform 122 are both accommodated in the first accommodating groove 111a.

Of course, in other embodiments, the adapter plate 222 may further be accommodated outside the first accommodating groove 111a, and in this case, the embodiments of the present application may include the following solutions: 1. At least a part of the first fitting structure 131 is accommodated in the first accommodating groove 111a, and the first extension platform 122 is not accommodated in the first accommodating groove 111a; 2. At least a part of the first fitting structure 131 and at least a part of the first extension platform 122 are both accommodated in the first accommodating groove 111a.

In other words, the arranging position of the adapter plate 222 has no direct connection with the arranging position of the first extension platform 122. In the axial direction of the mounting through hole 111b, the adapter plate 222 can be provided on the side of the first extension platform 122 facing away from the active material-coated portion 21, or the adapter plate 222 can be provided on the side of the first extension platform 122 facing the active material-coated portion 21, or the adapter plate 222 is arranged to be basically aligned with the first extension platform 122.

Referring to FIG. 16, in some embodiments, a part of the first converged portion 2211 is accommodated in the first accommodating groove 111a, and the other part of the first converged portion 2211 is located outside the first accommodating groove 111a.

Taking the bottom wall of the first accommodating groove 111a as a reference, a distance between one end of the above-mentioned part of the first converged portion 2211 (that is, the part of the first converged portion 2211 accommodated in the first accommodating groove 111a) facing the bottom wall of the first accommodating groove 111a and the bottom wall of the first accommodating groove 111a is less than the depth H of the first accommodating groove 111a, and a distance between one end of the above-mentioned part of the first converged portion 2211 facing away from the bottom wall of the first accommodating groove 111a and the bottom wall of the first accommodating groove 111a is equal to the depth H of the first accommodating groove 111a.

In the above technical solution, by accommodating a part of the first converged portion 2211 in the first accommodating groove 111a, the occupation of the tab portion 221 on the arrangement space provided for the cell assembly 20 inside the case 11 is further reduced, which is conducive to further improving the volumetric energy density of the battery cell 100.

In other embodiments of the present application, the first converged portion 2211 may also be arranged outside the first accommodating groove 111a.

In some embodiments, in the first implementation, at least a part of the adapter plate 222 and a part of the first converged portion 2211 are both accommodated in the first accommodating groove 111a.

Referring to FIG. 15, in a second implementation, an active material-coated portion 21 includes a current collector 211 and an active material layer 212 arranged on the current collector 211. A conductive portion 22 includes a tab portion 221 and an adapter plate 222. The tab portion 221 includes a plurality of tabs electrically connected to the current collector 211. The plurality of tabs converge at positions close to the current collector 211 to form a first converged portion 2211, and the plurality of tabs converge at positions away from the current collector 211 and are connected to form a second converged portion 2212. The adapter plate 222 is electrically connected to the second converged portion 2212.

In combination with FIG. 15, the groove opening of the first accommodating groove 111a is formed on the inner surface of the first case wall 111, at least a part of the adapter plate 222 is accommodated in the first accommodating groove 111a, and the adapter plate 222 is electrically connected to the first terminal post 12.

Taking the bottom wall of the first accommodating groove 111a as a reference, a distance between one end of the above-mentioned at least a part of the adapter plate 222 (that is, the part of the adapter plate 222 accommodated in the first accommodating groove 111a) facing the bottom wall of the first accommodating groove 111a and the bottom wall of the first accommodating groove 111a is less than the depth H of the first accommodating groove 111a, and a distance between one end of the above-mentioned at least a part of the adapter plate 222 facing away from the bottom wall of the first accommodating groove 111a and the bottom wall of the first accommodating groove 111a is less than or equal to the depth H of the first accommodating groove 111a. Then, in the wall thickness direction of the first case wall 111, the thickness of the above-mentioned at least a part of the adapter plate 222 is less than or equal to the depth of the first accommodating groove 111a.

In the above technical solution, by accommodating at least a part of the adapter plate 222 in the first accommodating groove 111a, the occupation of the conductive portion 22 on the arrangement space provided for the cell assembly 20 inside the case 11 is reduced, which is conducive to further improving the volumetric energy density of the battery cell 100.

It is worth noting that, in the second implementation, the arranging position of the adapter plate 222 is not directly related to the arranging position of the first extension platform 122. Therefore, when at least a part of the adapter plate 222 is accommodated in the first accommodating groove 111a, the first extension platform 122 can be arranged outside the first accommodating groove 111a, or at least a part of the first extension platform 122 is accommodated in the first accommodating groove 111a. Of course, in the second implementation, the adapter plate 222 can also be arranged outside the first accommodating groove 111a, and in this case, the first extension platform 122 can be arranged outside the first accommodating groove 111a, or at least a part of the first extension platform 122 can be accommodated in the first accommodating groove 111a.

It is understandable that, in the second implementation, at least a part of the second converged portion 2212 may be accommodated in the first accommodating groove 111a, or the second converged portion 2212 is arranged outside the first accommodating groove 111a. Likewise, in the second implementation, a part of the first converged portion 2211 is may be accommodated in the first accommodating groove 111a, or the first converged portion 2211 is located outside the first accommodating groove 111a. For example, in the second implementation: 1. At least a part of the second converged portion 2212 is accommodated in the first accommodating groove 111a, and the first converged portion 2211 is arranged outside the first accommodating groove 111a; 2. At least a part of the second converged portion 2212 and a part of the first converged portion 2211 are both accommodated in the first accommodating groove 111a; 3. The first converged portion 2211 and the second converged portion 2212 are both arranged outside the first accommodating groove 111a.

Referring to FIG. 12 to FIG. 16, in some embodiments, the first terminal post 12 is formed with a third accommodating groove 12a, a groove opening of the third accommodating groove 12a is formed on a side surface of the first terminal post 12 facing away from the active material-coated portion 21, the third accommodating groove 12a is in communication with the interior of the case 11 through a perforation 12b, the conductive portion 22 penetrates the perforation 12b and at least a part of the conductive portion 22 is accommodated in the third accommodating groove 12a.

In the above technical solution, by arranging the third accommodating groove 12a, it is helpful to reduce the weight of the first terminal post 12, so as to improve the gravimetric energy density of the battery cell 100. At the same time, since the groove opening of the third accommodating groove 12a is formed on an outer end face of the terminal post, when at least a part of the conductive portion 22 is accommodated in the third accommodating groove 12a, it is convenient to receive and organize the conductive portion 22 through the groove opening of the third accommodating groove 12a, or to electrically connect the conductive portion 22 to the first terminal post 12, or the like, thereby reducing the difficulty of producing the battery cell 100. At the same time, since the third accommodating groove 12a can be in communication with the interior of the case 11 through the perforation 12b, the third accommodating groove 12a can also be used as a buffer and temporary storage structure for an electrolyte solution, so that more electrolyte solution can be accommodated in the case 11. Since the electrolyte solution may be consumed during the charging and discharging of the battery cell 100, when there is more electrolyte solution, the service life of the battery cell 100 can be extended. Moreover, because the third accommodating groove 12a can be in communication with the interior of the case 11 through the perforation 12b, the third accommodating groove 12a can also be used as an accommodation and buffer structure for gas produced inside the cell assembly 20, thereby reducing the expansion of the battery cell 100.

It is understandable that the above technical solution is applicable to both the first implementation and the second implementation mentioned above.

For example, the first terminal post 12 may further include a terminal post cover plate 124, and the terminal post cover plate 124 covers a groove opening of the third accommodating groove 12a to close the third accommodating groove 12a.

Of course, the connection arrangement between the conductive portion 22 and the first terminal post 12 is not limited thereto. For example, the conductive portion 22 can also be directly electrically connected to one end of the first terminal post 12 facing the active material-coated portion 21. In this case, the conductive portion 22 does not need to be inserted into the perforation 12b. Alternatively, as shown in FIG. 10, a fourth accommodating groove 12c is formed on the side of the first terminal post 12 facing the active material-coated portion 21, and a groove opening of the fourth accommodating groove 12c is formed on a side surface of the first terminal post 12 facing the active material-coated portion 21, at least a part of the second converged portion 2212 is accommodated in the fourth accommodating groove 12c, and the conductive portion 22 is electrically connected to a bottom wall of a side of the fourth accommodating groove 12c away from the active material-coated portion 21.

For example, the depth H of the first accommodating groove 111a < (the axial thickness of the first fitting structure 131 in the mounting through hole 111b + the axial thickness of the first extension platform 122 in the mounting through hole 111b + Δ), and the first accommodating groove 111a can at least accommodate at least a part of the first fitting structure 131. For example, the first accommodating groove 111a accommodates at least a part of the first fitting structure 131 and does not accommodate the first extension platform 122, or the first accommodating groove 111a accommodates the first fitting structure 131 and at least a part of the first extension platform 122 and does not accommodate the conductive portion 22, or the first accommodating groove 111a accommodates the first fitting structure 131, at least a part of the first extension platform 122, and at least a part of the conductive portion 22. As can be seen, the value of Δ may be related to the maximum required height of the conductive portion 22, for example, Δ may be 5.5 mm, but is not limited thereto.

In a third aspect, an embodiment of the present application further provides a battery 200, including the above battery cell 100.

In the above technical solution, the battery 200 adopts the above-mentioned battery cell 100, which can improve the energy density of the battery 200.

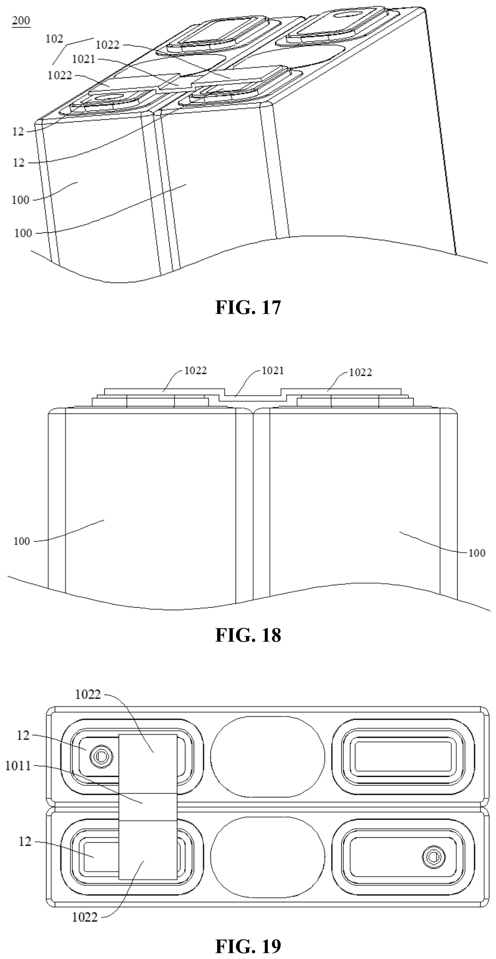

Referring to FIG. 16 and FIG. 17, in some embodiments, there are a plurality of battery cells 100, and the first terminal post 12 is arranged to protrude from the outer surface of the first case wall 111. The battery 200 further includes a busbar component 102, and the reflux component 102 includes a buffer portion 1021 and two connecting portions 1022. The two connecting portions 1022 are electrically connected to the first terminal posts 12 of the two battery cells 100, respectively. The buffer portion 1021 is connected between the two connecting portions 1022, and at least a part of the buffer portion 1021 protrudes toward the case 11 relative to the connecting portion 102 and is stretchable and deformable, then at least a part of the buffer portion 1021 has a certain stretching deformation ability under the action of an external force.

In the above technical solution, by setting at least a part of the buffer portion 1021 to be stretchable and deformable, the busbar component 102 can relieve the stress caused by the expansion of the battery cell 100 during the use of the battery 200, and at least a part of the buffer portion 1021 can undergo a certain degree of stretching deformation following the expansion of the battery cell 100, so as to reduce the pulling of the busbar component 102 on the first terminal post 12, and also reduce the tensile force on the busbar component 102, thereby reducing the risk of the busbar component 102 being broken by pulling, and improving the reliability of the battery 200. By arranging at least a part of the buffer portion 1021 to protrude toward the case 11 relative to the connecting portion 102, so that the space corresponding to the part of the first terminal post 12 of each of the two battery cells 100 protruding from the corresponding case 11 is used to jointly accommodate at least a part of the buffer portion 1021, which is conducive to reducing the space occupied by the battery 200 and further facilitating the improvement of the volumetric energy density of the battery 200.

For example, at least a part of the buffer portion 1021 is formed as a bent portion having an opening, and the opening is arranged facing away from the case 11.

In a fourth aspect, an embodiment of the present application provides an electrical apparatus 1000, including the above-mentioned battery 200. The battery 200 is configured to provide electric energy.

In the above technical solution, the electrical apparatus 1000 adopts the above-mentioned battery 200, which can improve the range and reliability of the electrical apparatus 1000.

Referring to FIG. 7, FIG. 10, and FIG. 11 again, the battery cell 100 according to specifically embodiments of the present application is described.

In the embodiments of the present application, the battery cell 100 includes a case assembly 10 and a cell assembly 20. The case assembly 10 includes a case 11, a first terminal post 12, an insulating sealing structure 13, an insulating structure 14, and a bracket 15. The cell assembly 20 includes an active material-coated portion 21 and a conductive portion 22. The active material-coated portion 21 is arranged in the case 11, and the conductive portion 22 electrically connects the active material-coated portion 21 to the first terminal post 12.

The case 11 includes a case body 11a and a case cover 11b. One side of the case body 11a is open. A case wall on a side of the case body 11a opposite to the open side is a first case wall 111. Four side walls connected between the first case wall 111 and the case cover 11b are all second case walls 112. The first case wall 111 includes a main body portion 1111 and an accommodating portion 1112. The main body portion 1111 is arranged around the accommodating portion 1112. The accommodating portion 1112 includes an end wall 1112a and a side wall 1112b. The end wall 1112a and the side wall 1112b enclose a first accommodating groove 111a. A groove opening of the first accommodating groove 111a is formed on an inner surface of the first case wall 111. A mounting through hole 111b is formed on the end wall 1112a, and an outer side surface of the end wall 1112a is arranged to protrude from an outer side surface of the main body portion 1111. The first terminal post 12 is arranged to protrude from an outer side surface of the first case wall 111, and the first terminal post 12 includes a terminal post body 121, a first extension platform 122, and a second extension platform 123. The terminal post body 121 penetrates the mounting through hole 111b, and the first extension platform 122 and the second extension platform 123 are respectively provided at two axial ends of the terminal post body 121 and both extend relative to the terminal post body 121 in a direction away from a central axis L of the mounting through hole 111b. The first extension platform 122 extends to an inner side of the inner surface of the first case wall 111, and the second extension platform 123 extends to an outer side of an outer surface of the first case wall 111.

The insulating sealing structure 13 includes a first fitting structure 131 and a second fitting structure 132. The first fitting structure 131 is fitted between the first case wall 111 and the first extension platform 122, and the second fitting structure 132 is fitted between the first case wall 111 and the second extension platform 123. On a plane perpendicular to the central axis L of the mounting through hole 111b, an orthographic projection of the first extension platform 122 and an orthographic projection of the second extension platform 123 are both located within a range surround by an orthographic projection of the side wall 1112b. In the radial direction of the mounting through hole 111b, the first fitting structure 131 is spaced apart from an outer peripheral edge of the first extension platform 122. The insulating structure 14 is arranged at the outer peripheral edge of the first extension platform 122 and is at least partially fitted between the first extension platform 122 and the end wall 1112a. The bracket 15 is arranged in the case 11 and cooperates with the cell assembly 20 to separate the active material-coated portion 21 from the first case wall 111. The first fitting structure 131 is arranged in the first accommodating groove 111a, and the first extension platform 122 and the conductive portion 22 are both arranged outside the first accommodating groove 111a.

The case assembly 10 may include a first insulating sealing member, at least a part of the first insulating sealing member is configured as the first fitting structure 131. For example, the first insulating sealing member includes the first fitting structure 131 and a third fitting structure, the third fitting structure is connected to a radial inner side of the first fitting structure 131, and the third fitting structure is fitted between a hole wall of the mounting through hole 111b and the terminal post body 121. The case assembly 10 includes a second insulating sealing member, at least a part of the second insulating sealing member is configured as the second fitting structure 132. For example, the second insulating sealing member includes the second fitting structure 132 and a fourth fitting structure, the fourth fitting structure is connected to a radial inner side of the second fitting structure 132, and the fourth fitting structure is fitted to an outer peripheral wall of the second extension platform 123.

In the above technical solution, by arranging the first accommodating groove 111a, so that on the premise that the case 11 provides a sufficient arrangement space for the cell assembly 20, the case 11 can additionally provide an arrangement space for at least a part of the first fitting structure 131. The part of the first fitting structure 131 located in the first accommodating groove 111a will not occupy the arrangement space provided by the case 11 for the cell assembly 20, which can improve the volumetric energy density of the battery cell 100.

It should be noted that, without conflict, embodiments in the present application and features in the embodiments may be in combination together. The above descriptions are merely preferred embodiments of the present application and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A case assembly, comprising:
a case, comprising a first case wall, the first case wall being formed with a first accommodating groove, a groove opening of the first accommodating groove being formed on an outer surface or inner surface of the first case wall, and a bottom wall of the first accommodating groove being formed with a mounting through hole;
a first terminal post, comprising a terminal post body penetrating the mounting through hole, and a first extension platform connected to the terminal post body and extending relative to the terminal post body in a direction away from a central axis of the mounting through hole, the first extension platform being arranged on a side of the first case wall where the first accommodating groove is formed; and
an insulating sealing structure, comprising a first fitting structure, the first fitting structure being fitted between the first case wall and the first extension platform, and at least a part of the first fitting structure being accommodated in the first accommodating groove.

2. The case assembly according to claim 1, wherein at least a part of the first extension platform is accommodated in the first accommodating groove.

3. The case assembly according to claim 2, wherein on a plane perpendicular to the central axis of the mounting through hole, an orthographic projection of the first extension platform is located within an outer contour range of an orthographic projection of a peripheral wall of the first accommodating groove.

4. The case assembly according to claim 3, wherein the first extension platform is located at an axial end of the terminal post body, and a depth of the first accommodating groove is greater than a sum of a thickness of the at least a part of the first fitting structure and a thickness of the first extension platform in an axial direction of the mounting through hole.

5. The case assembly according to any one of claims 1 to 4, wherein the first case wall comprises a main body portion and an accommodating portion, the main body portion is arranged around the accommodating portion, the accommodating portion comprises an end wall and a side wall, the end wall and the side wall enclose the first accommodating groove, the mounting through hole is formed on the end wall, and a side surface of the end wall facing away from the side wall is arranged to protrude from a surface of the main body portion.

6. The case assembly according to claim 5, wherein a thickness of the end wall and a thickness of the side wall are both greater than or equal to a thickness of the main body portion.

7. The case assembly according to claim 5 or 6, wherein the main body portion and the accommodating portion are an integral structure formed by stamping or stretching.

8. The case assembly according to claim 7, wherein a minimum distance between an outer peripheral edge of the accommodating portion and an outer peripheral edge of the main body portion is greater than 0.5 mm.

9. The case assembly according to claim 7 or 8, wherein the case further comprises a second case wall adjacent to the first case wall, at least a part of an outer surface of the main body portion is formed as a fillet surface, and the fillet surface is connected to an outer surface of the second case wall.

10. The case assembly according to claim 9, wherein the main body portion comprises a flat portion and a fillet portion, the flat portion is connected to the second case wall through the fillet portion, and an outer surface of the fillet portion is formed as the fillet surface.

11. The case assembly according to any one of claims 1 to 4, wherein the first case wall comprises a main body portion and an accommodating portion, the main body portion is arranged around the accommodating portion, the accommodating portion comprises an end wall and a side wall, the end wall and the side wall enclose the first accommodating groove, the mounting through hole is formed on the end wall, and a side surface of the end wall facing away from the side wall is arranged to be flush with a surface of the main body portion.

12. The case assembly according to any one of claims 1 to 11, wherein the groove opening of the first accommodating groove is formed on the inner surface of the first case wall, and in a radial direction of the mounting through hole, the first fitting structure is spaced apart from an outer peripheral edge of the first extension platform;
the case assembly further comprises:
an insulating structure, arranged at the outer peripheral edge of the first extension platform and at least partially fitted between the first extension platform and the first case wall.

13. The case assembly according to claim 12, wherein on the plane perpendicular to the central axis of the mounting through hole, the orthographic projection of the first extension platform is located within the outer contour range of the orthographic projection of the peripheral wall of the first accommodating groove, and
the insulating structure comprises a first insulating portion and a second insulating portion that are connected, the first insulating portion is fitted between the bottom wall of the first accommodating groove and the first extension platform, and the second insulating portion is arranged around the first extension platform and covers at least a part of the outer peripheral wall of the first extension platform.

14. The case assembly according to claim 12 or 13, wherein the case assembly further comprises:
a bracket, arranged in the case and suitable for cooperating with the cell assembly of the battery cell to separate an active material-coated portion of the cell assembly from the first case wall,
wherein the bracket and the insulating structure are an integral component; or the bracket and the insulating structure are separate components and are connected.

15. The case assembly according to any one of claims 1 to 14, wherein the first terminal post further comprises a second extension platform connected to the terminal post body and extending relative to the terminal post body in a direction away from the central axis of the mounting through hole, the second extension platform and the first extension platform extend to the inner and outer sides of the first case wall respectively, and
the insulating sealing structure comprises a second fitting structure, the second fitting structure being fitted between the first case wall and the second extension platform.

16. The case assembly according to claim 15, wherein the first case wall is further formed with a second accommodating groove, the groove opening of the first accommodating groove is formed on the inner surface of the first case wall, a groove opening of the second accommodating groove is formed on the outer surface of the first case wall, the second extension platform extends to an outer side of the outer surface of the first case wall, and at least a part of the second fitting structure is accommodated in the second accommodating groove.

17. A battery cell, comprising:
the case assembly according to any one of claims 1 to 16; and
a cell assembly, comprising an active material-coated portion and a conductive portion, the active material-coated portion being arranged in the case, and the conductive portion electrically connecting the active material-coated portion to the first terminal post.

18. The battery cell according to claim 17, wherein the active material-coated portion comprises a current collector and an active material layer arranged on the current collector, the conductive portion comprises a tab portion electrically connected to the current collector, the tab portion comprises a plurality of tabs, the plurality of tabs converge at positions close to the current collector to form a first converged portion, the plurality of tabs converge at positions away from the current collector and are connected to form a second converged portion, the first converged portion connects the second converged portion and the active material-coated portion,
the groove opening of the first accommodating groove is formed on the inner surface of the first case wall, and at least a part of the second converged portion is accommodated in the first accommodating groove.

19. The battery cell according to claim 18, wherein the conductive portion further comprises an adapter plate, the adapter plate is connected to the second converged portion, the conductive portion is electrically connected to the first terminal post through the adapter plate, and at least a part of the adapter plate is accommodated in the first accommodating groove.

20. The battery cell according to claim 18 or 19, wherein a part of the first converged portion is accommodated in the first accommodating groove.

21. The battery cell according to claim 17, wherein the active material-coated portion comprises a current collector and an active material layer arranged on the current collector, the conductive portion comprises a tab portion and an adapter plate, the tab portion comprises a plurality of tabs that are electrically connected to the current collector, the plurality of tabs converge at positions close to the current collector to form a first converged portion, the plurality of tabs converge at positions away from the current collector and are connected to form a second converged portion, the adapter plate is electrically connected to the second converged portion,
the groove opening of the first accommodating groove is formed on the inner surface of the first case wall, and at least a part of the adapter plate is accommodated in the first accommodating groove and is electrically connected to the first terminal post.

22. The battery cell according to any one of claims 17 to 21, wherein the first terminal post is formed with a third accommodating groove, a groove opening of the third accommodating groove is formed on a side surface of the first terminal post facing away from the active material-coated portion, the third accommodating groove is in communication with the interior of the case through a perforation, the conductive portion penetrates the perforation and is at least partially accommodated in the third accommodating groove.

23. A battery, comprising the battery cell according to any one of claims 17 to 22.

24. The battery according to claim 23, wherein there are a plurality of battery cells, and the first terminal post is arranged to protrude from the outer surface of the first case wall, the battery further comprises a busbar component, and the busbar component comprises a buffer portion and two connecting portions, the two connecting portions are electrically connected to first terminal posts of two battery cells respectively, the buffer portion is connected between the two connecting portions, and at least a part of the buffer portion protrudes toward the case relative to the connecting portion and is stretchable and deformable.

25. An electrical apparatus, comprising the battery according to claim 23 or 24.
